# EUROPÄISCHE PATENTSCHRIFT

(11) **EP 4 175 991 B1**
(45) Veröffentlichungstag und Bekanntmachung des Hinweises auf die Patenterteilung: **14.08.2024**
(21) Anmeldenummer: 21737461.0
(22) Anmeldetag: 30.06.2021
(51) Int. Cl.: C08G 18/32, C08G 18/40, C08G 18/48, C08G 18/63, C08G 18/66, C08G 18/76

(54) **POLYURETHANSCHÄUME MIT VERBESSERTEN AKUSTISCHEN EIGENSCHAFTEN**
POLYURETHANE FOAMS HAVING IMPROVED ACOUSTIC PROPERTIES
MOUSSES DE POLYURÉTHANE À DES PROPRIÉTÉS ACOUSTIQUES AMÉLIORÉES

(30) Priorität: 01.07.2020 EP 20183359
(43) Veröffentlichungstag der Anmeldung: 10.05.2023
(73) Patentinhaber: BASF SE, 67056 Ludwigshafen am Rhein (DE)
(72) Erfinder: OTERO MARTINEZ, Iran, 49448 Lemfoerde (DE); RAETH, Alexander, 49448 Lemfoerde (DE); ALTMEPPEN, Sonja, 49448 Lemfoerde (DE); FRISCHE, Bianca, 49448 Lemfoerde (DE)
(74) Vertreter: BASF IP Association
(86) Internationale Anmeldenummer: PCT/EP2021/067993
(87) Internationale Veröffentlichungsnummer: WO 2022/003022

(56) Entgegenhaltungen:
- DE-A1- 10 105 559

## Beschreibung

Die Erfindung betrifft in einem ersten Aspekt ein Verfahren zur Herstellung eines Polyurethan-Schaumes, umfassend die Umsetzung von (a) einer Isocyanatzusammensetzung umfassend mindestens ein Polyisocyanat auf Basis von Diphenylmethandiisocyanat; (b) einer Polyolmischung, wobei die Polyolmischung (b1) 50 bis 85 Gewichts-% mindestens eines Polyetherpolyols mit einer Hydroxylzahl im Bereich von 10 bis 60 mg KOH/g, einer OH-Funktionalität von mehr als 2 und einem Ethylenoxidanteil im Bereich von 50 bis 100 Gewichts-%, bezogen auf den Gehalt an Alkylenoxid des mindestens einen Polyetherpolyols, sowie (b2)15 bis 50 Gewichts-% mindestens eines Polyetherpolyols mit einer Hydroxylzahl im Bereich von 10 bis 100 mg KOH/g, einer OH-Funktionalität von mehr als 2, einem Ethylenoxidanteil im Bereich von 2 bis 30 Gewichts-%, bezogen auf den Gehalt an Alkylenoxid des mindestens einen Polyetherpolyols, und einem Anteil an primären OH-Gruppen von 40 bis 100 % bezogen auf die Gesamtzahl der OH-Gruppen in dem mindestens einen Polyetherpolyol, jeweils bezogen auf die gesamte Gewichtsmenge der Bestandteile (b1) und (b2), die 100 Gewichts-% ergibt, sowie (b3) 0 bis 20 weitere Gewichtsteile eines, optional derivatisierten, Füllstoffs, bezogen auf 100 Gewichtsteile der Komponenten (b1) und (b2), gegebenenfalls enthalten als Bestandteil eines Graftpolyols auf Basis einer oder mehrerer der Komponenten (b1) und (b2), umfasst; (c) einer Treibmittelzusammensetzung umfassend Wasser; wobei bei der Umsetzung die Treibmittelzusammensetzung (c) in einem gewichtsbasierten Verhältnis Gewicht Treibmittelzusammensetzung (c) : Gesamtgewicht aller bei der Umsetzung eingesetzten Isocyanat-reaktiven Verbindungen im Bereich von 1:14 bis 1:6 eingesetzt wird; wobei ein Polyurethan-Schaum aufweisend ein Raumgewicht, bestimmt nach DIN EN ISO 845 (Oktober 2009), von höchstens 25 kg/m³, und eine Stauchhärte, bestimmt bei 40 % Stauchung bei erster Stauchung gemäß DIN EN ISO 3386-1 (Oktober 2015), im Bereich von 10 bis 80 kPa erhalten wird.

In einem zweiten Aspekt betrifft die Erfindung einen Polyurethan-Schaum, erhalten oder erhältlich nach dem Verfahren des ersten Aspektes. Ein dritter Aspekt der Erfindung betrifft die Verwendung eines Polyurethan-Schaums gemäß dem zweiten Aspekt als Schallabsorptionsmaterial. Gemäß einem vierten Aspekt betrifft die Erfindung ein Schallabsorptionsmaterial, umfassend einen Polyurethan-Schaum nach dem zweiten Aspekt, bevorzugt bestehend aus einem Polyurethan-Schaum nach dem zweiten Aspekt. Ein fünfter Aspekt der Erfindung betriff die Verwendung einer Polyolmischung (b) umfassend (b1), (b2) und (b3) wie zum ersten Aspekt definiert, zur Herstellung eines Polyurethan-Schaums.

Polyurethan-Schäume werden in Verkehrsmitteln zu diversen Zwecken verwendet. So dienen Polyurethan-Weichschäume oft als Material für Autositze und Autoteppiche, bedingt durch ihre mechanische Kenngrößen im Hinblick auf Härte, Elastizität, Dehnung und Zugfestigkeit, wobei Wechselwirkungen beispielsweise bei Rückprallelastizität und Dichte bestehen. Ein weiterer wichtiger Parameter für Polyurethan-Weichschäume ist deren Dichte. Dabei ist man bestrebt, die Dichte aus Kosten- und Gewichtsgründen zu verringern, um möglichst wenig Material einzusetzen. Allerdings führt eine Verringerung der Dichte bei gleichbleibender Härte zu einer Verringerung der Elastizität. Ein weiterer wichtiger Parameter für die Komforteigenschaften von Polyurethan-Weichschäumen in Sitz- und Liegemöbeln ist eine hohe Luftdurchlässigkeit.

WO 2019/002013 A1 beschreibt Polyurethan-Weichschäume mit verbesserter Luftdurchlässigkeit, die auf einer speziellen Polyolmischung basieren. Die Polyurethan-Weichschäume werden als Matratze oder als Kissen, als Polsterelement für Möbel oder als Sitzelement verwendet.

Ein Autoteppich wird in der EP 1 664 147 B1 offenbart, wobei der Autoteppich ein Thermoformweichschaumstoff auf Polyurethanbasis ist, erhältlich durch Umsetzung von Polyisocyanaten mit Polymerpolyolen zu einem Polyurethanweichschaumstoff und anschließendem irreversiblen Thermoformen des erhaltenen Weichschaumstoffs bei Temperaturen oberhalb der Glastemperatur der thermoplastischen Polymeren. WO 2009/003964 A1 betrifft eine Harzzusammensetzung sowie ein Polyurethan-System zur Verwendung bei der Formung eines Polyurethan-Artikels, wobei der Polyurethan-Artikel insbesondere für Sitze verwendet wird.

Für Anwendungen zur Schallabsorption, insbesondere in einem Verkehrsmittel, muss ein Polyurethanschaum bestimmte Anforderungen im Hinblick auf seine Eigenschaften erfüllen, so müssen beispielsweise Dichte (Raumgewicht) und Härte geeignete Werte aufweisen, wobei das Raumgewicht < 25 kg/m³ und die Härte im Bereich von 10 bis 80 kPa sein sollte.

EP 1 230 297 B1 betrifft ein Verfahren zur Herstellung von Polyurethanhartschaumstoffen und Polyurethanweichschaumstoffen, die ein flammenhemmendes Mittel enthalten. Als Anwendungen werden unter anderem die Soundisolierung in Automobilanwendungen und die Vibrationsisolierung im Allgemeinen benannt. EP 2 800 770 B2 beschreibt ein Verfahren zur Herstellung eines flammgeschützten Polyurethanhalbhartschaumstoffs oder einen Polyurethanhartschaumstoff mit einer Dichte von 5 bis 50 g/L (kg/m³) und einer Druckspannung bei 10 % Stauchung nach DIN 53 421 / DIN EN ISO 604 von größer 15 bis kleiner 80 kPa. Der Polyurethanhalbhartschaumstoff bzw. der Polyurethanhartschaumstoff wird in Fahrzeugen zur Schallisolierung von Wänden, Türen und Dächern oder im Motorraum verwendet.

Für Anwendungen zur Schallabsorption, insbesondere in einem Verkehrsmittel, müssen auch die akustischen Eigenschaften eines Polyurethan-Schaums zur Schallabsorption geeignet sein, d.h. die Luftdurchlässigkeit sollte gute Werte aufweisen, gleichzeitig sollte der Luftströmungswiderstand ausreichend gute Werte zeigen. Für die Herstellung der entsprechenden Teile ist es weiterhin relevant, dass ein entsprechender Schaum thermoverformbar ist.

Aufgabe der Erfindung war es daher, einen Polyurethan-Schaum und ein Verfahren zu dessen Herstellung bereitzustellen, wobei die Polyurethan-Schäume geeignete Dichten (Raumgewichte) von weniger als 25 kg%m³ und gleichzeitig Stauchhärten von mindestens 10 kPa aufweisen sollten. Ebenso sollten die Polyurethan-Schäume geeignete akustische Eigenschaften, insbesondere Luftdurchlässigkeit bei gleichzeitig passenden Werten für den Luftströmungswiderstand aufweisen. Zusätzlich sollten die Polyurethan-Schäume thermoverformbar sein.

Die Aufgabe wird gemäß einem ersten Aspekt gelöst mit einem Verfahren zur Herstellung eines Polyurethan-Schaumes, umfassend die Umsetzung von:
(a) einer Isocyanatzusammensetzung umfassend mindestens ein Polyisocyanat auf Basis von Diphenylmethandiisocyanat;
(b) einer Polyolmischung umfassend
   (b1) 50 bis 85 Gewichts-% mindestens eines Polyetherpolyols mit einer Hydroxylzahl im Bereich von 10 bis 60 mg KOH/g, einer OH-Funktionalität von mehr als 2 und einem Ethylenoxidanteil im Bereich von 50 bis 100 Gewichts-%, bezogen auf den Gehalt an Alkylenoxid des mindestens einen Polyetherpolyols,
   (b2) 15 bis 50 Gewichts-% mindestens eines Polyetherpolyols mit einer Hydroxylzahl im Bereich von 10 bis 100 mg KOH/g, einer OH-Funktionalität von mehr als 2, einem Ethylenoxidanteil im Bereich von 2 bis 30 Gewichts-%, bezogen auf den Gehalt an Alkylenoxid des mindestens einen Polyetherpolyols, und einem Anteil an primären OH-Gruppen von 40 bis 100 % bezogen auf die Gesamtzahl der OH-Gruppen in dem mindestens einen Polyetherpolyol,
   jeweils bezogen auf die gesamte Gewichtsmenge der Bestandteile (b1) und (b2), die 100 Gewichts-% ergibt;
   sowie
   (b3) 0 bis 20 weitere Gewichtsteile eines, optional derivatisierten, Füllstoffs, bezogen auf 100 Gewichtsteile der Komponenten (b1) und (b2), gegebenenfalls enthalten als Bestandteil eines Graftpolyols auf Basis einer oder mehrerer der Komponenten (b1) und (b2);
(c) einer Treibmittelzusammensetzung umfassend Wasser;

wobei bei der Umsetzung die Treibmittelzusammensetzung (c) in einem gewichtsbasierten Verhältnis Gewicht Treibmittelzusammensetzung (c): Gesamtgewicht aller bei der Umsetzung eigesetzten Isocyanat-reaktiven Verbindungen im Bereich von 1:14 bis 1:6 eingesetzt wird;
wobei ein Polyurethan-Schaum aufweisend ein Raumgewicht, bestimmt nach DIN EN ISO 845 (Oktober 2009), von höchstens 25 kg/m³, und eine Stauchhärte, bestimmt bei 40 % Stauchung bei erster Stauchung gemäß DIN EN ISO 3386-1 (Oktober 2015), im Bereich von 10 bis 80 kPa, erhalten wird.

Isocyanat-reaktive Verbindungen sind Verbindungen, die ein oder mehr Funktionalitäten aufweisen, welche gegenüber Isocyanatgruppen reaktiv sind, bevorzugt ausgewählt aus der Gruppe bestehend aus Thiogruppe, Hydroxylgruppe, Aminogruppe (-NH- oder-NH₂), Carbonsäuregruppe und Carbonsäureamidgruppe, weiter bevorzugt aus der Gruppe bestehend aus Thiogruppe, Hydroxylgruppe und Aminogruppe (-NH- oder NH₂), weiter bevorzugt sind die ein oder mehr Funktionalitäten, welche gegenüber Isocyanatgruppen reaktiv sind, Hydroxylgruppen. Isocyanat-reaktive Verbindungen sind insbesondere die Polyole der Polyolmischung (b), d.h. (b1), (b2), optional (b4), gegebenenfalls weiterhin Kettenverlängerungs- und Vernetzungsmittel, sowie einige Katalysatoren, beispielsweise Amin-haltige Katalysatoren, wie später noch näher erläutert.

Unter Hydroxylzahl wird im Rahmen der vorliegenden Erfindung die gemäß DIN 53240 bestimmte Hydroxylzahl verstanden. Sie wird in mg KOH/g angegeben. Die Hydroxylzahl ist über die Formel Mn [g/mol] = (f * 56106 g/mol) / OHZ [mg/g] mit dem Molgewicht Mn verknüpft, wobei f die OH-Funktionalität des Polyetherpolyols ist.

Unter OH-Funktionalität einer Verbindung wird im Rahmen der vorliegenden Erfindung die Zahl der reaktiven OH-Gruppen pro Molekül verstanden.

Im Falle der Polyetherpolyole der Polyolmischung (b) bezeichnet die OH-Funktionalität die Zahl der reaktiven OH-Gruppen pro Molekül. Falls für eine bestimmte Komponente Mischungen aus Verbindungen mit unterschiedlicher Funktionalität zum Einsatz kommen, ergibt sich die Funktionalität der Komponenten jeweils aus dem zahlengewichteten Mittel der Funktionalität der einzelnen Verbindungen, so dass unter Funktionalität stets die zahlenmittlere Funktionalität zu verstehen ist. Unter einem "Polyetherpolyol mit einer OH-Funktionalität von 2,2" wird weiterhin ein Polyetherpolyol verstanden, welches im Mittel pro Molekül im Bereich von 2,0 bis 2,2 Hydroxylgruppen aufweist. In der Praxis wird von der nominalen Funktionalität abgewichen, da verschiedene Nebenreaktionen während der Polyol-Synthese zu einer Funktionalität führen können, die real niedriger sein kann als nominal angenommen (M. lonescu, Chemistry and Technology of Polyols, Rapra, 2005, S. 67-75).

Der aus dem erfindungsgemäßen Verfahren erhaltenen Polyurethan-Schaum (PU-Schaum) kennzeichnet sich neben Raumgewicht und Stauchhärte dadurch aus, dass er einen Luftströmungswiderstand (Air Flow Resistance, AFR) bestimmt gemäß DIN EN ISO 9053-1 (März 2019) von höchstens 10000 Pa.s/m aufweist, sowie weiterhin eine Luftdurchlässigkeit bestimmt gemäß DIN EN ISO 7231 (Dezember 2010) von mindestens 0,02 dm³/s. Weitere Details zum PU-Schaum finden sich nachfolgend beschrieben bezüglich des zweiten Aspektes der Erfindung.

### Polyolmischung (b)

Im erfindungsgemäßen Verfahren wird eine Polyolmischung (b) eingesetzt. Bevorzugt umfasst die Polyolmischung (b) das mindestens eine Polyetherpolyol (b1) im Bereich von 60 bis 82 Gewichts-%, bevorzugt im Bereich von 65 bis 80 Gewichts-%, weiter bevorzugt im Bereich von 68 bis 78 Gewichts-%, weiter bevorzugt im Bereich von 70 bis 75 Gewichts-%, bezogen auf die gesamte Gewichtsmenge der Bestandteile (b1) und (b2), die 100 Gewichts-% ergibt.

Bevorzugt umfasst die Polyolmischung (b) das mindestens eine Polyetherpolyol (b2) im Bereich von 18 bis 40 Gewichts-%, bevorzugt im Bereich von 21 bis 32 Gewichts-%, noch mehr bevorzugt 25 bis 30 Gewichts-%, bezogen auf die gesamte Gewichtsmenge der Bestandteile (b1) und (b2), die 100 Gewichts-% ergibt.

### Polyetherpolyol (b1)

Die Polyolmischung (b) umfasst ein Polyetherpolyol (b1). Bevorzugt weist das Polyetherpolyol (b1) eine OH-Funktionalität im Bereich von 2,2 bis 8, bevorzugt im Bereich von 2,2 bis 4, weiter bevorzugt im Bereich von 2,4 bis 3,3, auf.

Die Hydroxylzahl der Polyetherpolyole (b1) beträgt vorzugsweise im Bereich von 15 bis 58 mg KOH/g, weiter bevorzugt im Bereich von 20 bis 55 mg KOH/g, weiter bevorzugt im Bereich von 25 bis 50 mg KOH/g.

Derartige Polyetherpolyole (b1) können als Zellöffnerpolyole bezeichnet werden, da ihre Mitverwendung in der Regel zu einer erhöhten Offenzelligkeit des Polyurethan-Weichschäumen führt. Erfindungsgemäß enthaltene Zellöffnerpolyole sind aus dem Stand der Technik bekannt. Die im Stand der Technik eingesetzten Mengen an Zellöffnerpolyol betragen bei der Herstellung von elastischen Schäumen in der Regel unter 20 Gew.-% der Polyolkomponente. Bei Hypersoftschäumen, welches sehr weiche Schäume mit einer Stauchhärte, bestimmt bei 40 % Stauchung gemäß DIN EN ISO 3386-1 (Oktober 2015), von weniger als 2 kPa sind, werden hohe Anteile an Zellöffnerpolyol in der Herstellung verwendet, zumeist zwischen 70 und 80 Gewichts-%, bezogen auf alle eingesetzten Polyole. Der Einsatz derartiger Zellöffnerpolyole in Mengen im Bereich von 60 bis 82 Gewichts-% bezogen auf die gesamte Gewichtsmenge der Bestandteile (b1) und (b2), die 100 Gewichts-% ergibt, ist bei Schäumen, die eine Stauchhärte über 10 kPa aufweisen und thermoverformt werden bzw. thermoverformbar sind, ist im Stand der Technik bisher nicht bekannt.

Bevorzugt weist das Polyetherpolyol (b1) einen Anteil an primären OH-Gruppen im Bereich von 40 bis 100 %, bevorzugt im Bereich von 50 bis 90 %, weiter bevorzugt im Bereich von 60 bis 90 %, weiter bevorzugt im Bereich von 70 bis 90 %, bezogen auf die Gesamtzahl der OH-Gruppen des Polyetherpolyols (b1), auf. Die Anteile primärer und sekundärer OH-Gruppen werden vorzugsweise aus den ¹H-NMR-Spektren der peracetylierten Polyetherpolyole gemäß ASTM D-4273-11 ermittelt.

Die Herstellung von Polyetherpolyolen (b1) ist aus dem Stand der Technik bekannt. Geeignete Polyetherpolyole (b1) und ihre Herstellung werden beispielsweise in der DE 4318120 A1 näher beschrieben.

Für die Herstellung der Polyetherpolyole (b1) eingesetzte Starterverbindungen sind vorzugsweise hydroxyfunktionell oder aminofunktionell. Geeignete Starterverbindungen sind beispielsweise Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Vorzugsweise wird als Starterverbindung Glycerin, Trimethylolpropan, Saccharose und/oder Sorbitol eingesetzt. Besonders bevorzugt erfolgt die Herstellung der Polyetherpolyole (b1) auf Basis von trifunktionellen Startern, insbesondere Glycerin.

Der Anteil von Ethylenoxid an der gesamten Gewichtsmenge Alkylenoxid in (b1) beträgt vorzugsweise im Bereich von 60 bis 100 Gew.-%, insbesondere von 65 bis 90 Gew.-%, besonders bevorzugt im Bereich von 70 bis 85 Gew.-%. In einer ersten bevorzugten Ausführungsform wird als Alkylenoxid ausschließlich Ethylenoxid eingesetzt. In einer weiteren bevorzugten Ausführungsform wird Ethylenoxid in Mischung mit mindestens einem weiteren Alkylenoxid verwendet. Geeignete weitere Alkylenoxide sind beispielsweise Propylenoxid, 1,2-Butylenoxid bzw. 2,3-Butylenoxid und Styroloxid. Vorzugsweise ist das weitere Alkylenoxid Propylenoxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Eine Erhöhung des Ethylenoxid-Gehalts im Ethylenoxid/Propylenoxid-Gemisch führt in der Regel zu einer Erhöhung des Anteils primärer OH-Gruppen im Polyetherpolyol. Der Anteil an primären OH-Endgruppen lässt sich durch späteres Zudosieren von reinem Ethylenoxid erhöhen. Produkte mit Ethylenoxidendblöcken weisen einen besonders hohen Anteil an primären OH-Gruppen auf.

### Polyetherpolyol (b2)

Die Polyolmischung (b) umfasst ein Polyetherpolyol (b2). Das Polyetherpolyol (b2) weist bevorzugt eine OH-Funktionalität im Bereich von 2,2 bis 8, bevorzugt im Bereich von 2,2 bis 4, weiter bevorzugt im Bereich von 2,4 bis 3,3 auf.

Die Hydroxylzahl der Polyetherpolyole (b2) beträgt vorzugsweise im Bereich von 15 bis 90 mg KOH/g, weiter bevorzugt im Bereich von 20 bis 80 mg KOH/g, weiter bevorzugt im Bereich von 25 bis 50 mg KOH/g.

Weiterhin weist in einer Ausführungsform des Verfahrens das Polyetherpolyol (b2) einen Anteil an primären OH-Gruppen im Bereich von 50 bis 100 %, bevorzugt im Bereich von 70 bis 90 %, bezogen auf die Gesamtzahl der OH-Gruppen des Polyetherpolyols (b2), auf. Die Anteile primärer und sekundärer OH-Gruppen werden vorzugsweise aus den ¹H-NMR-Spektren der peracetylierten Polyetherpolyole gemäß ASTM D-4273-11 ermittelt.

Es ist in einer weiteren Ausführungsform bevorzugt, in (b2) hochfunktionelle Polyetherpolyole mit einer OH-Funktionalität von im Bereich mehr als 4 und höchstens 8, weiter bevorzugt im Bereich von mehr als 4 bis 6, weiter bevorzugt im Bereich von 4,1 bis 6, zu verwenden. In dieser Ausführungsform wird besonders bevorzugt Saccharose, Sorbitol oder Mischungen daraus oder Mischungen der vorgenannten Verbindungen mit Glycerin als Starter verwendet.

Die Herstellung von Polyetherpolyolen (b2) ist aus dem Stand der Technik bekannt. Geeignete Polyetherpolyole (b2) können nach bekannten Verfahren, beispielsweise durch anionische Polymerisation mit Alkalihydroxiden, wie beispielsweise Natrium- oder Kaliumhydroxid oder Alkalialkoholaten, wie beispielsweise Natriummethylat, Natrium-oder Kaliumethylat oder Kaliumisopropylat als Katalysatoren hergestellt werden. Eine solche Herstellungsweise wird in der DE 4318120 A1 näher beschrieben.

Für die Herstellung Polyetherpolyole (b2) geeignete Starterverbindungen sind identisch mit den zum Polyetherpolyol (b1) genannten. In einer bevorzugten Ausführungsform erfolgt die Herstellung der Polyetherpolyole (b2) auf Basis von tri- oder höherfunktionellen Startern, insbesondere trifunktionellen Startern, ganz besonders bevorzugt Glycerin.

Der Anteil von Ethylenoxid an der gesamten Gewichtsmenge Alkylenoxid in (b2) beträgt vorzugsweise im Bereich von 5 bis 30 Gew.-%, insbesondere im Bereich von 5 bis 25 Gew.-%, besonders bevorzugt im Bereich von 8 bis 22 Gew.-%. Somit wird Ethylenoxid in Mischung mit mindestens einem weiteren Alkylenoxid verwendet. Geeignete weitere Alkylenoxide sind beispielsweise Propylenoxid, 1,2-Butylenoxid bzw. 2,3-Butylenoxid und Styroloxid. Vorzugsweise ist das weitere Alkylenoxid Propylenoxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Die Zugabe von reinem Ethylenoxid im letzten Schritt der Alkoxylierung ergibt Produkte mit Ethylenoxidendblöcken. Solche Produkte mit Ethylenoxidendblöcken weisen einen besonders hohen Anteil an primären Endgruppen auf.

In einer bevorzugten Ausführungsform wird das Polyetherpolyol (b2) ganz oder teilweise in derivatisierter Form, beispielsweise in Form eines Graftpolyols, d.h. in Kombination mit dem, optional derivatisierten Füllstoff (b3), eingesetzt, um die Mischung b zu bilden. Diese Ausführungsform wird weiter unten im Rahmen des, optional derivatisierten, Füllstoffs (b3) näher erläutert.

### Optional derivatisierter Füllstoff (b3)

Die Polyolmischung (b) enthält optional 0 bis 20 weitere Gewichtsteile eines, optional derivatisierten, Füllstoffs, bezogen auf 100 Gewichtsteile der Komponenten (b1) und (b2), gegebenenfalls enthalten als Bestandteil eines Graftpolyols auf Basis einer oder mehrerer der Komponenten (b1) und (b2).

Unter Füllstoff wird im Rahmen der vorliegenden Erfindung ein Feststoff verstanden.

Der optional derivatisierte Füllstoff gemäß (b3) liegt als Bestandteil eines Graftpolyols auf Basis eines Polyetherpolyols (b2), bevorzugt in einer Menge im Bereich von 0,01 bis 20 weiteren Gewichtsteilen, weiter bevorzugt im Bereich von 1 bis 10 weiteren Gewichtsteilen, bezogen auf 100 Gewichtsteile der Komponenten (b1) und (b2), vor;
und/oder
der Füllstoff gemäß (b3) liegt als Dispersion in einem Polyetherpolyol (b2), bevorzugt in einer Menge im Bereich von 0,01 bis 20 weiteren Gewichtsteilen, weiter bevorzugt im Bereich von 1 bis 10 weiteren Gewichtsteilen, weiter bevorzugt im Bereich von 3 bis 8 weiteren Gewichtsteilen, bezogen auf 100 Gewichtsteile der Komponenten (b1) und (b2), vor.

Bevorzugt umfasst der, optional derivatisierte, Füllstoff gemäß (b3) ein Polymer, wobei der, optional derivatisierte, Füllstoff bevorzugt zu im Bereich von 95 bis 100 Gewichts-%, weiter bevorzugt zu im Bereich von 98 bis 100 Gewichts-%, weiter bevorzugt zu im Bereich von 99 bis 100 Gewichts-%, weiter bevorzugt zu 100 Gewichts-%, aus dem Polymer besteht, wobei das Polymer bevorzugt ausgewählt aus der Gruppe bestehend aus (Co-)Polymeren auf Basis von Styrol- und/oder Acrylnitril, weiter bevorzugt zumindest (Poly)Styrolacrylnitril (SAN) umfasst.

In einer Ausführungsform des Verfahrens enthält die Polyolmischung (b) keine Füllstoffe (b3).

In einer weiteren Ausführungsform enthält die Polyolmischung (b) den Füllstoff (b3) in derivatisierter Form als Bestandteil eines Graftpolyols, d.h. in Kombination mit Polyetherpolyolen. Die Verwendung von Graftpolyolen führt zu einer verbesserten Zugfestigkeit. Die Verwendung von Graftpolyolen führt zudem zu einer besseren Kompatibilität und Langzeitstabilität der Polyolmischung (b). Dabei ist es vorteilhaft, als Basispolymer für die Graftpolyole Polyetherpolyole (b2) zu verwenden. Derartige Graftpolyole sind aus dem Stand der Technik bekannt oder können nach bekannten Methoden hergestellt werden.

Als Füllstoff sind SAN-Partikel besonders bevorzugt. In einer bevorzugten Ausführungsform des Verfahrens wird der derivatisierte Füllstoff als Graftpolyol in Form eines polymermodifizierte Polyetherpolyols, vorzugsweise Pfropfpolyetherpolyols, eingesetzt, welches durch *in situ* Polymerisation von Acrylnitril, Styrol oder vorzugsweise Mischungen aus Styrol und Acrylnitril, bevorzugt im Gewichtsverhältnis 90:10 bis 10:90, weiter bevorzugt 70:30 bis 30:70, in einem Polyetherpolyol (b2) hergestellt wird. Statt des Polyetherpolyols (b2) kann auch eine Polyetherpolyoldispersion eingesetzt werden, die als disperse Phase, üblicherweise in einer Menge von 1 bis 50 Gew.-%, vorzugsweise 2 bis 25 Gew.-%, enthalten: beispielsweise Polyharnstoffe, Polyhydrazide, Polyurethane enthaltend tert.-Aminogruppen in gebundener Form, und/oder Melamin. Herstellungsverfahren für solche Polyetherpolyoldispersionen sind bekannt und werden beispielsweise im "Dow Polyurethanes Flexible Foams", 2. Auflage 1997, Kapitel 2" näher beschrieben.

In einer weiteren Ausführungsform liegt der Füllstoff gemäß (b3) als Dispersion in einem Polyetherpolyol (b2) vor. Beispielsweise kann eine Dispersion eines Füllstoffs (b3) im sogenannten Schmelzemulgierverfahren erhalten werden. Dieses Verfahren ist in WO 2009/138379 A1 beschrieben. Dabei wird ein thermoplastisches Polymer, gegebenenfalls zusammen mit Stabilisator, und Polyamin auf eine Temperatur oberhalb des Schmelzpunkts des thermoplastischen Polymers erwärmt, homogenisiert, beispielsweise mit Ultraschall, Extruder oder einer Zahnkranzdispergiermaschine und auf eine Temperatur unterhalb des Schmelzpunkts des thermoplastischen Polymers abgekühlt. Dabei können im Prinzip alle thermoplastischen Polymere eingesetzt werden. Vorzugsweise werden die thermoplastischen Polymere eingesetzt, die durch Polymerisation der oben genannten Monomere erhalten werden können. Gegebenenfalls wird weiter ein Emulgator zugegeben. Zum Beispiel können die Stabilisatoren und Emulgatoren eingesetzt werden, die in WO 2009/138379 A1 beschrieben sind. In einer bevorzugten Ausführungsform ist das thermoplastische Polymer zum Einsatz im Schmelzemulgierverfahren Polystyrolacrylnitril.

### weiteres Polyetherpolyol (b4)

In einer Ausführungsform des Verfahrens umfasst die Polyolmischung (b) weiter:
(b4) mindestens ein weiteres Polyetherpolyol, welches sich von dem mindestens einen Polyetherpolyol gemäß (b1) und von dem mindestens einen Polyetherpolyol gemäß (b2) unterscheidet und eine Hydroxylzahl von mehr als 350 mg KOH/g, bevorzugt im Bereich von 350 bis 800 mg KOH/g, aufweist.

Das weitere Polyetherpolyol (b4) weist bevorzugt eine OH-Funktionalität von 3 oder mehr, weiter bevorzugt im Bereich von 3 bis 5, weiter bevorzugt im Bereich von 3 bis 4 auf.

Polyetherpolyole (b4) werden auch als Hartschaumpolyole bezeichnet. Die Herstellung von Polyetherpolyolen (b4) ist aus dem Stand der Technik bekannt. Beispielsweise können sie durch anionische Polymerisation mit Alkalihydroxiden, wie beispielsweise Natrium- oder Kalium- hydroxid oder Alkalialkoholaten, wie beispielsweise Natriummethylat, Natrium- oder Kaliumethylat oder Kaliumisopropylat als Katalysatoren und unter Zusatz mindestens eines Startermoleküls, das 2 bis 8, vorzugsweise 2 bis 6, reaktive Wasserstoffatome aufweist, oder durch kationische Polymerisation mit Lewissäuren, wie beispielsweise Antimonpentachlorid oder Borfluorid-Etherat, oder Bleicherde als Katalysatoren hergestellt werden. Auch tertiäre Amine können als Katalysator eingesetzt werden, beispielsweise Triethylamin, Tributylamin, Trimethylamin, Dimethylethanolamin, Imidazol oder Dimethylcyclohexylamin. Für spezielle Einsatzzwecke können auch monofunktionelle Starter in den Polyetheraufbau eingebunden werden. Als Startermoleküle für die Herstellung von Polyetherpolyolen (b4) kommen beispielsweise in Betracht: Wasser, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin (TDA) und 4,4'-, 2,4'- und 2,2'-Diaminodiphenylmethan (MDA) und polymerisches MDA. Als Startermoleküle kommen ferner in Betracht: Alkanolamine, wie beispielsweise Ethanolamin, N-Methyl- und N-Ethylethanolamin, Dialkanolamine, wie beispielsweise Diethanolamin, N-Methyl- und N-Ethyldiethanolamin, Trialkanolamine, wie beispielsweise Triethanolamin, und Ammoniak. Vorzugsweise verwendet werden mehrwertige Alkohole, wie Ethandiol, 1,2- und 2,3-Propandiol, Diethylenglykol, Dipropylenglykol, 1,4-Butandiol, 1,6-Hexandiol, Glycerin,Trimethylolpropan, Pentaerythrit, Sorbitol und Saccharose, und Mischungen davon. Die Startermoleküle können einzeln oder in Form von Mischungen verwendet werden. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet
werden.

In einer bevorzugten Ausführungsform des Verfahrens enthält die Polyolmischung (b) das weitere Polyetherpolyol (b4) in einer Menge im Bereich von 0 bis 20 weiteren Gewichtsteilen, weiter bevorzugt im Bereich von 3 bis 15 weiteren Gewichtsteilen, weiter bevorzugt 5 bis 10 weiteren Gewichtsteilen, bezogen auf 100 Gewichtsteile der Komponenten (b1) und (b2).

In einer weiteren bevorzugten Ausführungsform des Verfahrens enthält die Polyolmischung (b) kein weiteres Polyetherpolyol (b4).

### weiteres Polyetherpolyol (b5)

Gemäß einer bevorzugten Ausführungsform des Verfahrens enthält die Polyolmischung (b) zu höchstens 5 weiteren Gewichtsteilen, bevorzugt im Bereich von 0 bis 5 weiteren Gewichtsteilen, weiter bevorzugt im Bereich von 0 bis 3 weiteren Gewichtsteilen, weiter bevorzugt im Bereich von 0 bis 1 weiteren Gewichtsteilen, bezogen auf 100 Gewichtsteile der Komponenten (b1) und (b2), ein weiteres Polyetherpolyol (b5), wobei (b5) eine Hydroxylzahl im Bereich von 10 bis 100 mg KOH/g, eine OH-Funktionalität von mindestens 2, einen Ethylenoxidanteil von 0 bis 30 Gewichts-% bezogen auf den Gehalt an Alkylenoxid und einen Anteil an primären OH-Gruppen von 0 bis 30 % bezogen auf die Gesamtzahl der OH-Gruppen im Polyetherpolyol (b5), aufweist.

Die Hydroxylzahl des weiteren Polyetherpolyols (b5) beträgt vorzugsweise im Bereich von 15 bis 90 mg KOH/g, insbesondere im Bereich von 20 bis 80 mg KOH/g, besonders bevorzugt im Bereich von 25 bis 75 mg KOH/g, ganz besonders bevorzugt im Bereich von 35 bis 65 mg KOH/g. Der Anteil an primären OH-Gruppen des weiteren Polyetherpolyols (b5) beträgt vorzugsweise im Bereich von 0 bis 25 %, insbesondere im Bereich von 0 bis 20 %, ganz besonders bevorzugt im Bereich von 0 bis 15 %, insbesondere im Bereich von 0 bis 10 % bezogen auf die Gesamtzahl der OH-Gruppen in (b5).

Die OH-Funktionalität es weiteren Polyetherpolyols (b5) beträgt vorzugsweise größer 2, besonders bevorzugt mindestens 2,2 und insbesondere mindestens 2,4. Die OH-Funktionalität des weiteren Polyetherpolyols (b5) beträgt vorzugsweise höchstens 4, besonders bevorzugt höchstens 3 und insbesondere höchstens 2,8. Bevorzugte weitere Polyetherpolyole (b5) weisen in einer bevorzugten Ausführungsform eine OH-Funktionalität von mehr als 2 und höchstens 4, besonders bevorzugt im Bereich von 2,2 bis 4, weiter bevorzugt im Bereich von 2,2 bis 3, insbesondere im Bereich von 2,4 bis 2,8 auf.

Die Herstellung von Polyetherpolyolen (b5) ist aus dem Stand der Technik bekannt. Geeignete Polyole werden nach bekannten Verfahren, beispielsweise durch anionische Polymerisation mit Alkalihydroxiden, wie beispielsweise Natrium- oder Kaliumhydroxid oder Alkalialkoholaten, wie beispielsweise Natriummethylat, Natrium-oder Kaliumethylat oder Kaliumisopropylat als Katalysatoren oder durch Doppelmetallcyanidkatalyse aus einem oder mehreren Alkylenoxiden mit 2 bis 4 Kohlenstoffatomen im Alkylenrest hergestellt. Solche Herstellungsverfahren werden beispielsweise in der DE 4318120 A1 und WO 2006/034800 A1 näher beschrieben. Für die Herstellung der Polyetherpolyole (b5) geeignete Starterverbindungen sind identisch zu den bezüglich des Polyetherpolyols (b1) ausgeführten.

In einer bevorzugten Ausführungsform erfolgt die Herstellung der Polyetherpolyole (b5) auf Basis von di-, tri- oder höherfunktionellen Startern, ganz besonders bevorzugt Glycerin, Monoethylenglykol und/oder Diethylenglykol. Vorzugsweise umfasst das Alkylenoxid der Polyetherpolyole (b5) Propylenoxid. In einer ersten bevorzugten Ausführungsform wird als Alkylenoxid ausschließlich Propylenoxid eingesetzt. In einer weiteren bevorzugten Ausführungsform wird Propylenoxid in Mischung mit mindestens einem weiteren Alkylenoxid verwendet. Geeignete weitere Alkylenoxide sind beispielsweise Ethylenoxid, 1 ,2-Butylenoxid bzw. 2,3-Butylenoxid und Styroloxid. Vorzugsweise ist das weitere Alkylenoxid Ethylenoxid. Der Anteil von Ethylenoxid an der gesamten Gewichtsmenge Alkylenoxid im Polyetherpolyol (b5) beträgt vorzugsweise im Bereich von 0 bis 20 Gew.-%, insbesondere im Bereich von 0 bis 15 Gew.-%, besonders bevorzugt im Bereich von 0 bis 12 Gew.-%. Vorzugsweise umfasst das Alkylenoxid, welches für die Herstellung der Polyetherpolyole (b5) eingesetzt wird. Propylenoxid.

Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Die Zugabe von reinem Propylenoxid oder Alkylenoxidmischungen mit überwiegend Propylenoxid im letzten Schritt der Alkoxylierung ergibt Produkte mit Propylenoxidendblöcken. Produkte mit Propylenoxidendblöcken weisen einen besonders hohen Anteil an sekundären OH-Gruppen auf.

Erfindungsgemäß ist es bevorzugt, dass bei dem Verfahren zur Herstellung eines Polyurethan-Schaumes des ersten Aspektes die Polyolmischung (b) zusätzlich zu (b1), (b2), und optional (b4) keine weiteren Polyole enthält, wobei die Polyolmischung (b) weiter bevorzugt aus (b1), (b2) und optional (b4) besteht.

### Isocyanatzusammensetzung (a)

Die Isocyanatzusammensetzung (a) umfasst mindestens ein Polyisocyanat auf Basis von Diphenylmethandiisocyanat (MDI). Unter Polyisocyanat wird im Rahmen der vorliegenden Erfindung ein mehrfunktionelles Isocyanat verstanden. Unter Funktionalität eines Isocyanats wird im Rahmen der vorliegenden Erfindung die Zahl der reaktiven NCO-Gruppen pro Molekül verstanden werden. Eine mehrfunktionelles Isocyanat weist dabei eine Funktionalität von mindestens 2, d.h. mindestens zwei NCO-Gruppen, auf. Falls für ein Polyisocyanat Mischungen aus Verbindungen mit unterschiedlicher Funktionalität zum Einsatz kommen, ergibt sich die Funktionalität der Komponenten jeweils aus dem zahlengewichteten Mittel der Funktionalität der einzelnen Verbindungen, so dass unter Funktionalität stets die zahlenmittlere Funktionalität zu verstehen ist. Die (zahlenmittlere) Funktionalität der Isocyanatzusammensetzung (a) liegt bevorzugt im Bereich von 2 bis 4, weiter bevorzugt im Bereich von 2 bis 3, weiter bevorzugt im Bereich von 2,1 bis 2,7. Vorzugsweise besteht die Isocyanatzusammensetzung (a) aus mindestens einem Polyisocyanat auf Basis von MDI. Polyisocyanate auf Basis von MDI sind dabei 2,2'-Diphenylmethandiisocyanat, 2,4`-Diphenylmethandiisocyanat, 4,4`-Diphenylmethandiisocyanat sowie mehrkerniges Diphenylmethandiisocyanat (mehrkerniges MDI, d. h. mit 3 oder mehr Kernen), das auch als Polyphenylpolymethylenisocyanat oder oligomeres MDI bezeichnet wird, oder Mischungen aus zwei oder mehreren der vorgenannten Verbindungen, oder Roh-MDI, welches bei der Herstellung von MDI anfällt. In einer Ausführungsform des Verfahrens werden die vorgenannten Polyisocyanate auf Basis von MDI in Mischung mit weiteren Polyisocyanaten, insbesondere weiteren aromatischen Polyisocyanaten, vorzugsweise Toluylendiisocyanat (TDI), eingesetzt. In einer besonders bevorzugten Ausführungsform werden ausschließlich Polyisocyanate auf Basis von MDI umgesetzt, d.h. die Isocyanatzusammensetzung (a) besteht zu im Bereich von 99 bis 100 Gewichts-%, bezogen auf das Gesamtgewicht der Isocyanatzusammensetzung (a) aus einem oder mehreren Polyisocyanaten auf Basis von Diphenylmethandiisocyanat (MDI).

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat^{®} vertrieben.

Vorzugsweise beträgt der Gehalt an Isocyanatgruppen der Isocanaytzusammensetzung (a) im Bereich von 5 bis 10 mmol/g, bevorzugt im Bereich von 6 bis 9 mmol/g, weiter bevorzugt im Bereich von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

Die Viskosität der eingesetzten Isocyanatzusammensetzung (a) kann in einem weiten Bereich variieren. Vorzugsweise weist die Isocyanatzusammensetzung (a) eine Viskosität im Bereich von 10 bis 300 mPa.s, weiter bevorzugt im Bereich von 20 bis 250 mPa.s, jeweils bei 25°C, auf.

In einer bevorzugten Ausführungsform des Verfahrens umfasst die Isocyanatzusammensetzung (a) im Bereich von 50 bis 64 Gewichts-%, weiter bevorzugt im Bereich von 54 bis 62 Gewichts-%, weiter bevorzugt im Bereich von 57 bis 62 Gewichts-%, 4,4`-Diphenylmethandiisocyanat (4,4'-MDI), bezogen auf 100 Gewichts-% Isocyanatzusammensetzung (a). In einer weiteren bevorzugten Ausführungsform des Verfahrens umfasst die Isocyanatzusammensetzung (a) im Bereich von 2 bis 10 Gewichts-%, weiter bevorzugt 6 bis 9 Gewichts-%, 2,4'-Diphenylmethandiisocyanat (2,4`-MDI), bezogen auf 100 Gewichts-% Isocyanatzusammensetzung (a). Besonders bevorzugt umfasst die Isocyanatzusammensetzung (a) im Bereich von 50 bis 64 Gewichts-%, weiter bevorzugt im Bereich von 54 bis 62 Gewichts-%, weiter bevorzugt im Bereich von 57 bis 62 Gewichts-%, 4,4`-Diphenylmethandiisocyanat (4,4'-MDI), und jeweils im Bereich von 2 bis 10 Gewichts-%, weiter bevorzugt 6 bis 9 Gewichts-%, 2,4`-Diphenylmethandiisocyanat (2,4'-MDI), jeweils bezogen auf 100 Gewichts-% Isocyanatzusammensetzung (a). In einer bevorzugten Ausführungsform des Verfahrens umfasst die Isocyanatzusammensetzung (a) im Bereich von 54 bis 62 Gewichts-% 4,4`-Diphenylmethandiisocyanat (4,4'-MDI), und im Bereich von 2 bis 10 Gewichts-%, bevorzugt 6 bis 9 Gewichts-%, 2,4`-Diphenylmethandiisocyanat (2,4'-MDI), jeweils bezogen auf 100 Gewichts-% Isocyanatzusammensetzung (a). In einer weiteren bevorzugten Ausführungsform des Verfahrens umfasst die Isocyanatzusammensetzung (a) im Bereich von 57 bis 62 Gewichts-% 4,4`-Diphenylmethandiisocyanat (4,4'-MDI), und im Bereich von 2 bis 10 Gewichts-%, bevorzugt 6 bis 9 Gewichts-%, 2,4`-Diphenylmethandiisocyanat (2,4'-MDI), jeweils bezogen auf 100 Gewichts-% Isocyanatzusammensetzung (a).

Eine entsprechende Zusammensetzung der Isocyanatzusammensetzung (a) aufweisend 4,4'-MDI und/oder 2,4'-MDI in den angegebenen Mengen führt zu einem deutlich verbesserten, d.h. verringerten, Luftströmungswiderstand (AFR), was wiederum deutlich verbesserte akustische Eigenschaften bedingt.

In einer weiteren Ausführungsform des Verfahrens umfasst die Isocyanatzusammensetzung (a) im Bereich von 30 bis 45 Gewichts-% mehrkerniges Diphenylmethandiisocyanat ( mehrkerniges MDI), bezogen auf 100 Gewichts-% Isocyanatzusammensetzung (a).

Mehrkerniges Diphenylmethandiisocyanat (mehrkerniges MDI) weist wie oben bereits erwähnt 3 oder mehr Kerne auf und wird auch als Polyphenylpolymethylenisocyanat oder oligomeres MDI bezeichnet wird. "Kern" meint dabei eine Phenylengruppe die eine Isocyanat-Gruppe trägt. Entsprechend sind sowohl 2,4'-MDI als auch 4,4'-MDI auch als zweikerniges MDI zu bezeichnen.

In einer bevorzugten Ausführungsform besteht die Isocyanatzusammensetzung (a) im Bereich von 95 bis 100 Gewichts-%, bevorzugt im Bereich von 98 bis 100 Gewichts-%, weiter bevorzugt im Bereich von 99 bis 100 Gewichtsprozent, aus 4,4'-MDI, 2,4'-MDI und mehrkernigem MDI, bezogen auf 100 Gewichts-% Isocyanatzusammensetzung (a), wobei weiter bevorzugt bei der Umsetzung von (a), (b), (c) kein weiteres Isocyanat außer den in der Isocyanatzusammensetzung (a) enthaltenen Polyisocyanaten wie oben erwähnt eingesetzt wird.

In einer Ausführungsform des Verfahrens werden bei der Umsetzung die Isocyanatzusammensetzung (a) und die Polyolmischung (b) in einem gewichtsbasierten Verhältnis, (a) : (b), im Bereich von 1:10 bis 10:1, bevorzugt im Bereich von 1:5 bis 5:1, bevorzugt im Bereich von 3:1 bis 1:1, weiter bevorzugt im Bereich von 2:1 bis 1:1, weiter bevorzugt im Bereich von 1,2:1 bis 1,8:1, eingesetzt.

In einer bevorzugten Ausführungsform wird Isocyanatzusammensetzung (a) ganz oder teilweise in Form von Polyisocyanatprepolymeren eingesetzt.

Diese Polyisocyanatprepolymere sind erhältlich, indem vorstehend beschriebene Polyisocyanate der Isocyanatzusammensetzung (a) ganz oder teilweise vorab mit gegenüber Isocyanaten reaktiven polymeren Verbindungen zum Isocyanatprepolymer umgesetzt werden. Die Umsetzung erfolgt im Überschuss der Isocyanatzusammensetzung (a), beispielsweise bei Temperaturen im Bereich von 30 bis 100 °C, bevorzugt bei etwa 80 °C.

Geeignete polymere Verbindungen mit gegenüber Isocyanaten reaktiven Gruppen sind dem Fachmann bekannt und beispielsweise beschrieben im "Kunststoffhandbuch, 7, Polyurethane", Carl Hanser-Verlag, 3. Auflage 1993, Kapitel 3.1.

Als polymere Verbindungen mit gegenüber Isocyanaten reaktiven Gruppen kommen grundsätzlich alle bekannten Verbindungen mit mindestens zwei gegenüber Isocyanaten reaktiven Wasserstoffatomen in Betracht, beispielsweise solche mit einer Funktionalität im Bereich von 2 bis 8 und einem zahlenmittleren Molekulargewicht Mn im Bereich von 400 bis 15000 g/mol. So können beispielsweise Verbindungen, ausgewählt aus der Gruppe der Polyetherpolyole, Polyesterpolyole oder Mischungen daraus, verwendet werden.

Geeignete Präpolymere sind beispielsweise in der DE 10314762 A1 ausgeführt.

Bevorzugte polymere Verbindungen mit gegenüber Isocyanaten reaktiven Gruppen sind Polyetherpolyole gemäß (b1) und/oder (b2), insbesondere Polyetherpolyole (b1). Die vorgenannten polymeren Verbindungen werden vorzugsweise mit den vorstehend genannten Polyisocyanaten umgesetzt, wobei letztere im Überschuss vorliegen.

Der NCO-Gehalt der verwendeten Prepolymere liegt vorzugsweise im Bereich von 20 bis 32,5%, besonders bevorzugt von 25 bis 31%. Der NCO-Gehalt wird gemäß ASTM D-5155-96 A) ermittelt.

### Katalysator (d)

Das Verfahren zur Herstellung eines Polyurethan-Schaumes des ersten Aspektes umfasst die Umsetzung von (a), (b) und (c). Die Umsetzung von (a), (b) und (c) erfolgt in einer Ausführungsform in Gegenwart mindestens eines Katalysators (d).

Katalysatoren (d) beschleunigen die Reaktion der Polyetherpolyole der Polyolmischung (b) und gegebenenfalls Kettenverlängerungsmitteln (e) Vernetzungsmittel (c) sowie Treibmittelzusammensetzung (c) mit der Polyolmischung (a) stark.

In einer Ausführungsform des Verfahrens enthält der mindestens eine Katalysator (d) einbaubare Aminkatalysatoren. Diese weisen mindestens eine, vorzugsweise 1 bis 8 und besonders bevorzugt 1 bis 2 gegenüber Isocyanaten reaktive Gruppen, wie primäre Amingruppen, sekundäre Amingruppen, Hydroxylgruppen, Amide oder Harnstoffgruppen, vorzugsweise primäre Amingruppen, sekundäre Amingruppen, Hydroxylgruppen, auf. Einbaubare Aminkatalysatoren werden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Diese umfassen Verbindungen, die neben der bzw. den gegenüber Isocyanaten reaktiven Gruppen vorzugsweise eine oder mehrere tertiäte Aminogruppen aufweisen. Vorzugsweise trägt mindestens eine der tertiären Aminogruppen der einbaubaren Katalysatoren mindestens zwei aliphatische Kohlenwasserstoffreste, vorzugsweise mit 1 bis 10 Kohlenstoffatomen je Rest, besonders bevorzugt mit 1 bis 6 Kohlenstoffatomen je Rest. Besonders bevorzugt tragen die tertiären Aminogruppen zwei Reste, unabhängig voneinander ausgewählt aus Methyl- und Ethylrest sowie einen weiteren organischen Rest. Beispiele für einsetzbare einbaubare Katalysatoren sind beispielsweise Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Dimethyaminopropyl-N,N-dimethylpropan-1,3-diamin, Dimethyl-2-(2-aminoethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3 aminopropyl)-bis(aminoethyl-ether), 3-Dimethylaminoisopropyl-diisopropanolamin oder Mischungen davon.

Neben den einbaubaren Aminkatalysatoren können weiter übliche Katalysatoren zur Herstellung der PU-Schäume eingesetzt werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, beispielsweise Zinn-(II)-acetat, Zinn-(II)-octoat, Zinn-(II)-ethylhexoatund Zinn-(II)-laurat und die Dialkylzinn-(IV)-salze von organischen Carbonsäuren, beispielsweise Dibutyl-zinndiacetat, Dibutylzinndilaurat, Zinn-Rizinolat, Dibutylzinn-maleat und Dioctylzinn-diacetat, sowie Zinkcarboxylate wie Zink-Rizinolat sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden.

Bevorzugt ist der mindestens eine Katalysator (d) ausgewählt aus der Gruppe bestehend aus einbaubarer Aminkatalysator, Amidin, tertiäres Amin, Alkanolaminverbindung, organische Metallverbindung und Mischungen von zwei oder mehr dieser Katalysatoren.

In einer bevorzugten Ausführungsform des Verfahrens werden bei der Umsetzung Katalysator (d) und Polyolmischung (b) in einem gewichtsbasierten Verhältnis, (d) : (b), im Bereich von 0,001:100 bis 5:100, bevorzugt im Bereich von 0,05:100 bis 2:100, eingesetzt.

### Weitere Bestandteile

In einer bevorzugten Ausführungsform des Verfahrens wird bei der Umsetzung von (a), (b), (c), optional in Gegenwart mindestens eines Katalysators (d), zusätzlich mindestens ein weiterer, von (a), (b), (c) und (d) verschiedener Bestandteil eingesetzt, welcher bevorzugt ausgewählt aus der Gruppe bestehend aus
(e) mindestens einem Kettenverlängerungsmittel,
(f) mindestens einem Vernetzungsmittel,
(g) mindestens einem Zusatzstoff, und
(h) mindestens einem Flammschutzmittel.

Es kann auch auf das Kettenverlängerungs- oder Vernetzungsmittel verzichtet werden. Zur Modifizierung der mechanischen Eigenschaften, beispielsweise der Härte, kann sich allerdings der Zusatz von Kettenverlängerungsmitteln (e), Vernetzungsmitteln (f) oder gegebenenfalls auch Gemischen davon als vorteilhaft erweisen.

Werden Kettenverlängerungsmittel (e) und/oder Vernetzungsmittel (f) eingesetzt, können die bei der Herstellung von Polyurethanen bekannten Kettenverlängerungsmittel und/oder Vernetzungsmittel eingesetzt werden. Dies sind vorzugsweise niedermolekulare Verbindungen mit gegenüber Isocyanaten reaktiven funktionellen Gruppen, beispielsweise Butandiol, 2-Methyl-1,3-propandiol, Sorbitol, Diethanolamin, Glycerin, Harnstoff, Trimethylolpropan, Glycole und Diamine. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.4 angegeben.

Weiter können Zusatzstoffe (g) eingesetzt werden, die sich von den Komponenten a) bis e) unterscheiden. Dabei können alle zur Herstellung von Polyurethanen bekannten Zusatzstoffe verwendet werden. Genannt seien beispielsweise oberflächenaktive Substanzen, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4. beschrieben.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schäume zu regulieren. Genannt seien beispielhaft Siloxan-Oxyalkylen-Mischpolymerisate und andere Organopolysiloxane, ox-ethylierte Alkylphenole, oxethylierte Fettalkohole, Paraffinöle, Rizinusöl- bzw. Rizinolsäureester, die in Mengen von 0,2 bis 8, vorzugsweise von 0,5 bis 5 Gewichtsteilen pro 100 Gewichtsteile der Polyolmischung (b) eingesetzt werden.

Als Flammschutzmittel (h) sind beispielsweise Phosphor- und/oder Halogenatome enthaltende Verbindungen, wie beispielsweiseTrikresylphosphat, Tris-2-chlorethylphosphat, Tris-chlor-propylphosphat, 2,2-bis(chloromethyl)trimethylene-bis(bis(2-chloroethyl)phosphat), oligomere Organophosphoporverbindungen (beispielsweise Fyrol^{®} PNX, Fyrolflex^{®} RDP) und Tris-2,3-dibrompropylphosphat geeignet. Weiterhin können auch anorganische Flammschutzmittel, beispielsweise Antimontrioxid, Arsenoxid, Ammoniumpolyphosphat, Blähgraphit und Calciumsulfat, oder Melamin zum Flammfestmachen der PU-Schäume verwendet werden. Weiterhin können einzelne oder mehrere, beliebige, üblicherweise für Polyurethane eingesetzte Flammschutzmittel verwendet werden. Diese umfassen halogensubstituierte Phosphate, wie Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat und/oder anorganische Flammschutzmittel, wie roter Phosphor, Aluminiumoxidhydrat, Antimontrioxid, Arsenoxid, Ammoniumpolyphosphat, Calciumsulfat und/oder Cyanursäurederivate, beispielsweise Melamin.

In einer Ausführungsform des Verfahrens wird mindestens Blähgraphit als Flammschutzmittel (h) eingesetzt. Blähgraphit (expandierbarer Graphit) ist allgemein bekannt. Dieser enthält ein oder mehrere expandierbare Mittel, sodass eine unter den Bedingungen eines Feuers eine betrachtliche Ausdehnung erfolgt. Blähgraphit wird durch bekannte Verfahren hergestellt. Dabei wird Graphit üblicherweise zunächst mit Oxidationsmitteln, wie Nitraten, Chromaten, Peroxiden, oder durch Elektrolyse modifiziert, um die Kristallschichten zu öffnen und anschließend werden Nitrate oder Sulfate in den Graphit eingelagert, welche unter gegebenen Bedingungen eine Expansion bewirken können. In einer bevorzugten Ausführungsform wird Blähgraphit in Kombination mit Ammoniumpolyphosphat verwendet.

In einer bevorzugten Ausführungsform des Verfahrens wird bei der Umsetzung von (a), (b), (c), optional in Gegenwart mindestens eines Katalysators (d) wie oben definiert, und optional einer oder mehrerer der Bestandteile (e), (f), (g) und (h) wie oben definiert, weniger als 1 weiteres Gewichtsteil, bezogen auf 100 Gewichtsteile (b1) und (b2), weiter bevorzugt kein, weiteres Polyol außer den in der Polyolmischung (b) enthaltenen Polyolen wie oben beschrieben eingesetzt. In einer weiter bevorzugten Ausführungsform des Verfahrens werden bei der Umsetzung nur (a), (b), (c), optional in Gegenwart mindestens eines Katalysators (d) wie oben definiert, und optional eine oder mehrerer der Bestandteile (e), (f), (g) und (h) wie oben definiert, umgesetzt.

### Treibmittelzusammensetzung (c)

Das Verfahren zur Herstellung eines Polyurethan-Schaumes umfasst die Umsetzung von (a) und (b) mit einer Treibmittelzusammensetzung (c) umfassend Wasser. Bevorzugt wird bei der Umsetzung die Treibmittelzusammensetzung (c) in einem gewichtsbasierten Verhältnis zum Gesamtgewicht aller in der Umsetzung eingesetzten Isocyanat-reaktiven Verbindungen im Bereich von 1:12 bis 1:7, bevorzugt im Bereich von 1:11 bis 1:8, eingesetzt. Weiter bevorzugt wird die Treibmittelzusammensetzung (c) in einem gewichtsbasierten Verhältnis zum Gesamtgewicht von (b1), (b2), optional (b4), optional Katalysator (d), optional Kettenverlängerungsmittel (e), optional Vernetzungsmittel (f), im Bereich von 1:14 bis 1:6, bevorzugt im Bereich von 1:12 bis 1:7, weiter bevorzugt im Bereich von 1:11 bis 1:8, eingesetzt.

In einer bevorzugten Ausführungsform des Verfahrens umfasst die Treibmittelzusammensetzung (c) Wasser als alleiniges Treibmittel, wobei bevorzugt im Bereich von 99 bis 100 Gewichts-%, weiter bevorzugt im Bereich von 99,5 bis 100 Gewichts-%, weiter bevorzugt im Bereich von 99,9 bis 100 Gewichts-% der Treibmittelzusammensetzung aus Wasser bestehen.

Für die Herstellung von PU-Schäumen sind verschiedene Verfahren wie Formschäumen oder Freischäumen einsetzbar. In einer bevorzugten Ausführungsform des Verfahrens wird frei geschäumt, weiter bevorzugt wird das Verfahren diskontinuierlich oder kontinuierlich in offenen Schaumstoff-Formwerkzeugen durchgeführt.

In einer Ausführungsform des Verfahrens werden die beschriebenen Ausgangsstoffe bei Temperaturen von ungefähr 15 bis 60°C, vorzugsweise 20 bis 40 °C gemischt und danach die Reaktionsmischung in offenen, gegebenenfalls temperierten Formwerkzeugen (unter Ausdehnung) aufschäumen gelassen, wobei gegebenenfalls eine Temperaturerhöhung ohne äußere Einwirkung stattfindet. Nach dem Ausdehnen kann die Aushärtung des PU-Schaums so lange wie notwendig fortgesetzt werden. Im allgemeinen wird ein Aushärtungszeitraum im Bereich von 1 Minute bis 24 Stunden und bevorzugt im Bereich von 5 Minuten bis 12 Stunden ausreichend sein. Wenn notwendig kann das Aushärten bei erhöhter Temperatur, d.h. unter Erwärmen von außen, durchgeführt werden. Im Anschluss kann der Schaum weiter verarbeitet, beispielsweise zerkleinert, werden. Es ist jedoch bevorzugt, es dem erhaltenen PU-Schaum vor der Weiterverarbeitung zu ermöglichen, unter 80 °C, bevorzugt unter 50 °C und am bevorzugtesten auf Raumtemperatur (25 °C) abzukühlen.

### 2. Aspekt - Polyurethan-Schaum

Ein zweiter Aspekt der Erfindung betritt einen Polyurethan-Schaum, erhalten oder erhältlich nach dem Verfahren gemäß dem ersten Aspekt wie oben beschrieben.

Ein erfindungsgemäßer PU-Schaum ist offenzellig und weist keine nennenswerte Haut auf. Offenzellig bedeutet hier, dass nach DIN ISO 4590 der PU-Schaum eine Offenzelligkeit von größer als 50 %, bevorzugt größer 85 %, weiterbevorzugt größer 90 %, aufweist. Im Rahmen der vorliegenden Erfindung ist ein PU-Schaum bevorzugt ein PU-Halbhartschaum ((halbharter Polyurethan-Schaumstoff), welcher als ein PU-Schaum definiert ist, der eine Druckspannung bei 10% Stauchung gemessen unter den Bedingungen gemäß DIN 7726 (Mai 1982) im Bereich von 10 bis 80 kPa aufweist. Bevorzugt weist der PU-(Halbhart)Schaum eine Druckspannung bei 10% Stauchung gemäß der Definition der DIN 7726 (Mai 1982) im Bereich von 15 bis 80 kPa auf.

In einer bevorzugten Ausführungsform weist der Polyurethan-Schaum eine Luftdurchlässigkeit, bestimmt gemäß DIN EN ISO 7231 (Dezember 2010) von mindestens 0,02 dm³/s, bevorzugt im Bereich von 0,02 bis 1 dm³/s, weiter bevorzugt im Bereich von 0,05 bis 1 dm³/s, auf.

In einer bevorzugten Ausführungsform weist der Polyurethan-Schaum einen Luftströmungswiderstand (Air Flow Resistance, AFR) bestimmt gemäß DIN EN ISO 9053-1 (März 2019) von höchstens 10000 Pa.s/m, bevorzugt im Bereich von 10 bis 10000 Pa.s/m, weiter bevorzugt im Bereich von 100 bis 5000 Pa.s/m, weiter bevorzugt im Bereich von 100 bis 1500 Pa.s/m, weiter bevorzugt im Bereich von 100 bis 1000 Pa.s/m, auf.

Besonders bevorzugt weist der Polyurethan-Schaum eine Luftdurchlässigkeit, bestimmt gemäß DIN EN ISO 7231 (Dezember 2010) von mindestens 0,02 dm³/s, bevorzugt im Bereich von 0,02 bis 1 dm³/s, weiter bevorzugt im Bereich von 0,05 bis 1 dm³/s, in Verbindung mit einem Luftströmungswiderstand, bestimmt gemäß DIN EN ISO 9053-1 (März 2019) von höchstens 10000 Pa.s/m, bevorzugt im Bereich von 10 bis 10000 Pa.s/m, weiter bevorzugt im Bereich von 100 bis 5000 Pa.s/m, weiter bevorzugt im Bereich von 100 bis 1500 Pa.s/m, weiter bevorzugt im Bereich von 100 bis 1000 Pa.s/m, auf.

Insbesondere der Luftströmungswiderstand, bestimmt gemäß DIN EN ISO 9053-1 (März 2019) von höchstens 10000 Pa.s/m macht den PU-Schaum der vorliegenden Erfindung besonders gut geeignet als Schallabsorptionsmaterial.

In einer bevorzugten Ausführungsform weist der Polyurethan-Schaum eine Stauchhärte, bestimmt bei 40 % Stauchung bei erster Stauchung gemäß DIN EN ISO 3386-1 (Oktober 2015), im Bereich von 10 bis 80 kPa, bevorzugt im Bereich von 15 bis 80 kPa, auf.

Bezüglich der Stauchhärte ist im Rahmen der vorliegenden Erfindung ein PU-Schaum als ein PU-Schaum definiert, der bei 40 % Stauchung bei erster Stauchung gemäß DIN EN ISO 3386-1 (Oktober 2015) eine Stauchhärte im Bereich von 10 bis 80 kPa, bevorzugt im Bereich von 10 bis 40 kPa, oder eine Stauchhärte im Bereich von 15 bis 80 kPa, bevorzugt im Bereich von 15 bis 40 kPa, aufweist.

In einer bevorzugten Ausführungsform weist der Polyurethan-Schaum ein Raumgewicht, bestimmt nach DIN EN ISO 845 (Oktober 2009), von höchstens 25 kg/m³, bevorzugt im Bereich von 10 bis 20 kg/m³, weiter bevorzugt im Bereich von 12 bis 18 kg/m³, auf.

In einer bevorzugten Ausführungsform weist der Polyurethan-Schaum eine Rückprallelastizität bestimmt nach DIN EN ISO 8307 (Dezember 2018) im Bereich von 15 bis 35 %, bevorzugt im Bereich von 18 bis 33 %, weiter bevorzugt im Bereich von 22 bis 30 %, auf.

Der PU-Schaum unterscheidet sich aufgrund seiner Rückprallelastizität im genannten Bereich deutlich von elastischen Schäumen, welche Rückprallelastizitäten bestimmt nach DIN EN ISO 8307 (Dezember 2018) von mehr als 35 %, üblicherweise im Bereich von 45 bis 70% aufweisen, sowie von viskoelatischen Schäumen, welche Rückprallelastizitäten bestimmt nach DIN EN ISO 8307 (Dezember 2018) von höchstens als 15 %, üblicherweise im Bereich von 5 bis 12 %, aufweisen.

Standardmäßig werden für die Herstellung von viskoelatischen Schäumen mindestens 5 Gewichts-%, bezogen auf das Gesamtgewicht aller Polyole, an Polyolen mit mittleren OH-Zahlen, d.h. Hydroxylzahlen im Bereich von 150-250 mg KOH/g, eingesetzt. Diese werden mit Polydiolen und gegebenenfalls Monoolen umgesetzt. Im Gegensatz dazu werden für die Herstellung der erfindungsgemäßen PU-Halbhartschäume weniger als 5 weitere Gewichtsteile, bevorzugt im Bereich von 0 bis 4,9 weiteren Gewichtsteilen, weiter bevorzugt im Bereich von 0 bis 3 weiteren Gewichtsteilen, weiter bevorzugt im Bereich von 0 bis 1 weiteren Gewichtsteilen, bezogen auf 100 Gewichtsteile der Komponenten (b1) und (b2), eines weiteren Polyols aufweisend eine Hydroxylzahl im Bereich von 150 bis 250 mg KOH/g, eingesetzt. Ebenso werden weniger als 5 weitere Gewichtsteile, bevorzugt im Bereich von 0 bis 4,9 weiteren Gewichtsteilen, weiter bevorzugt im Bereich von 0 bis 3 weiteren Gewichtsteilen, weiter bevorzugt im Bereich von 0 bis 1 weiteren Gewichtsteilen, bezogen auf 100 Gewichtsteile der Komponenten (b1) und (b2), eines Polydiols eingesetzt.

Der PU-Schaum ist thermoverformbar. Unter "thermoverformbar" wird im Rahmen der vorliegenden Erfindung verstanden, bevorzugt bei Temperaturen im Bereich von 100 bis 250°C, weiter bevorzugt im Bereich von 120 bis 200 °C, bevorzugt in einer geeigneten Form, irreversibei verformbar ist. Er wird bei der Thermoverformung bevorzugt um mindestens 50 %, bevorzugt um 70 bis 95 % seiner Dicke verpresst, d.h. auf eine Dicke von maximal 50%, bevorzugt auf eine Dicke im Bereich von 5 bis 30 % seiner Dicke vor der Thermoverformung verpresst.

Unter irreversiblem Verformen ist im Rahmen dieser Erfindung zu verstehen, dass sich die Dicke des thermoverformten PU-Schaums nicht verändert, bevorzugt dass sie im Temperaturbereich von - 70 bis + 70 °C ohne Druckeinwirkung und bei konstanten Temperatur und Feuchtigkeit in einem Zeitraum von mindestens einem Monat, beginnend zu einem Zeitpunkt t₀, an einer beliebigen Stelle des thermoverformte Polyurethanschaumstoffes nicht mehr verändert als 5%, bevorzugt nicht mehr 2%, bezogen auf die Dicke des thermoverformten PU-Schaumes zum Zeitpunkt t₀. Ferner erfolgt keine mit dem Auge erkennbare Änderung der durch den Thermoverformprozess gegebene Struktur.

Die thermoverformten PU-Schäume weisen weiterhin die gleichen akustischen Eigenschaften, insbesondere im Hinblick auf den Luftströmungswiderstand, auf, wie oben zum PU-Schaum beschrieben.

### 3. Aspekt - Verwendung als Schallabsorptionsmaterial

Ein dritter Aspekt der vorliegenden Erfindung betrifft die Verwendung eines Polyurethan-Schaums (PU-Schaum) gemäß des zweiten Aspektes als Schallabsorptionsmaterial, bevorzugt in einem Verkehrsmittel, bevorzugt in einem mobilen Verkehrsmittel, weiter bevorzugt in einem mobilen Verkehrsmittel zur Bewegung von Personen und/oder Gütern, wobei das Verkehrsmittel weiter bevorzugt ausgewählt ist aus der Gruppe bestehend aus Flugzeug, Schiff, Schienenfahrzeug, Lastkraftwagen und Automobil.

Gemäß einer bevorzugten Ausführungsform wird der PU-Schaum als Bestandteil einer Verkleidung in einem Verkehrsmittel im Innenbereich, im Motorraum oder im Außenbereich, verwendet.

Gemäß einer weiteren bevorzugten Ausführungsform wird der PU-Schaum im Automobilinnenbereich als Verkleidung einer Wand, einer Tür, eines Dachs oder im Motorraum, verwendet.

### 4. Aspekt - Schallabsorptionsmaterial

Ein vierter Aspekt der Erfindung betrifft ein Schallabsorptionsmaterial, umfassend einen Polyurethan-Schaum nach dem zweiten Aspekt, bevorzugt bestehend aus einem Polyurethan-Schaum nach dem zweiten Aspekt.

### 5. Aspekt - Verwendung einer Polyolmischung (b)

In einem fünften Aspekt betrifft die Erfindung die Verwendung einer Polyolmischung (b) umfassend:
(b1) 50 bis 85 Gewichts-% mindestens eines Polyetherpolyols mit einer Hydroxylzahl im Bereich von 10 bis 60 mg KOH/g, einer OH-Funktionalität von mehr als 2 und einem Ethylenoxidanteil im Bereich von 50 bis 100 Gewichts-%, bezogen auf den Gehalt an Alkylenoxid des mindestens einen Polyetherpolyols,
(b2) 15 bis 50 Gewichts-% mindestens eines Polyetherpolyols mit einer Hydroxylzahl im Bereich von 10 bis 100 mg KOH/g, einer OH-Funktionalität von mehr als 2, einem Ethylenoxidanteil im Bereich von 2 bis 30 Gewichts-%, bezogen auf den Gehalt an Alkylenoxid des mindestens einen Polyetherpolyols, und einem Anteil an primären OH-Gruppen von 40 bis 100 % bezogen auf die Gesamtzahl der OH-Gruppen in dem mindestens einen Polyetherpolyol,
   jeweils bezogen auf die gesamte Gewichtsmenge der Bestandteile (b1) und (b2), die 100 Gewichts-% ergibt;
   sowie
(b3) 0 bis 20 weitere Gewichtsteile eines, optional derivatisierten, Füllstoffs, bezogen auf 100 Gewichtsteile der Komponenten (b1) und (b2), gegebenenfalls enthalten als Bestandteil eines Graftpolyols auf Basis einer oder mehrerer der Komponenten (b1) und (b2);
zur Herstellung eines Polyurethan-Schaums, bevorzugt eines Polyurethan-Schaums, der mindestens eine der folgenden Eigenschaften aufweist:
- eine Luftdurchlässigkeit bestimmt gemäß DIN EN ISO 7231 (Dezember 2012) von mindestens 0,02 dm³/s, bevorzugt im Bereich von 0,02 bis 1 dm³/s, weiter bevorzugt im Bereich von 0,05 bis 1 dm³/s;
- einen Luftströmungswiderstand (Air Flow Resistance, AFR) bestimmt gemäß DIN EN ISO 9053-1 (März 2019) von höchstens 10000 Pa s/m, bevorzugt im Bereich von 10 bis 10000 Pa s/m, weiter bevorzugt im Bereich von 100 bis 5000 Pa s/m, weiter bevorzugt im Bereich von 100 bis 1500 Pa.s/m, weiter bevorzugt im Bereich von 100 bis 1000 Pa.s/m;
- eine Stauchhärte, bestimmt bei 40 % Stauchung bei erster Stauchung gemäß DIN EN ISO 3386-1 (Oktober 2015), im Bereich von 10 bis 80 kPa, bevorzugt im Bereich von 15 bis 80 kPa;
- ein Raumgewicht, bestimmt nach DIN EN ISO 845 (Oktober 2009), von höchstens 25 kg/m³, bevorzugt im Bereich von10 bis 20 kg/m³, weiter bevorzugt im Bereich von 12 bis 18 kg/m³;
- eine Rückprallelastizität bestimmt nach DIN EN ISO 8307 (Dezember 2018) im Bereich von 15 bis 35 %, bevorzugt im Bereich von 18 bis 33 %, weiter bevorzugt im Bereich von 22 bis 30 %.

Die Erfindung wird nachfolgend anhand von Beispielen erläutert.

### 1 Meßmethoden

**Tabelle 1**

| Verwendete Normen für die Schaumprüfungen | | | |
|---|---|---|---|
| **Eigenschaft** | **Einheit** | **Norm** | **Jahr-Monat** |
| Raumgewicht | kg/m³ | DIN EN ISO 845 | 2009-10 |
| Stauchhärte 40% (bei erster Stauchung) | kPa | DIN EN ISO 3386-1 | 2015-10 |
| Zugfestigkeit | kPa | DIN EN ISO 1798 | 2008-04 |
| Bruchdehnung | % | DIN EN ISO 1798 | 2008-04 |
| Rückprallelastizität | % | DIN EN ISO 8307 | 2018-12 |
| Luftdurchlässigkeit | dm³/s | DIN EN ISO 7231 | 2010-12 |
| AFR* | Pa.s/m | DIN EN ISO 9053-1 | 2019-03 |

| | | | |
|---|---|---|---|
| *Airflow resistance - Luftströmungswiderstand | | | |

### 2 Ausgangsmaterialien

| | |
|---|---|
| Polyol A: | OH-Zahl 42 mg KOH/g, Polyetheralkohol mit 77% primären OH-Gruppen auf Basis von Propylen- und Ethylenoxid (72 Gewichts-%), Starter Glycerin. Die mittlere Funktionalität betrug 2,7. |
| Polyol B: | OH-Zahl 29 mg KOH/g, Polyetheralkohol mit 79% primären OH-Gruppen auf Basis von Propylen- und Ethylenoxid (14 Gewichts-%), Starter Glycerin. Die mittlere Funktionalität betrug 2,7. |
| Polyol C: | OH-Zahl 35 mg KOH/g, Polyetheralkohol mit 72% primären OH-Gruppen auf Basis von Propylen- und Ethylenoxid (13 Gewichts-%), Starter Glycerin. Die mittlere Funktionalität betrug 2,7. |
| Polyol D: | OH-Zahl 20 mg KOH/g, Graftpolyol mit 45% Füllstoffgehalt (Styrolacrylnitril, SAN), Polyol C als Trägerpolyol. Die mittlere Funktionalität betrug 2,7. |
| Polyol E: | OH-Zahl 420 mg KOH/g, Polyetheralkohol auf Basis von Propylenoxid (78 Gewichts-%), Starter Glycerin. Die mittlere Funktionalität betrug 3,0. |
| DEOA: | Diethanolamin 80 Gewichts-% in Wasser |
| Sorbidex 70%: | 70 Gewichts-% Sorbitol in Wasser |
| Jeffcat DPA: | Aminkatalysator (Huntsmann) |
| Kosmos 29: | Zinnkatalysator (Evonik) |
| DABCO DC 198: | Sililkonstabilisator (Evonik) |
| Blähgraphit: | expandierbares Graphit |
| Exolit AP 422: | Ammoniumpolyphosphat (Clariant) |
| Isocyanat A: | NCO-Gehalt 31,5 Gewichts-%, mehrkerniges Diphenylmethandiisocyanat (mehrkerniges MDI) mit einer Funktionalität von 2,7 |
| Isocyanat B: | NCO-Gehalt 33,5 Gewichts-%, 4,4'-Diphenylmethandiisocyanat (4,4'-MDI) (∼99 Gewichts-%) |
| Isocyanat C: | NCO-Gehalt 33,5 Gewichts-%, Isomerengemisch aus 4,4'-MDI (∼50 Gewichts-%) und 4,4'-Diphenylmethandiisocyanat (2,4'-MDI) (∼50 Gewichts-%) |

### 3 Beispiele und Vergleichsbeispiele

Die Polyisocyanatzusammensetzungen (a)-1 bis (a)-4 wurden aus den Isocyanaten A, B und C durch Mischen erzeugt. Tabelle 2 zeigt die Zusammensetzung von (a)-1 bis (a)-4 in Gewichtsteilen bzw. in, aus den Gewichtsteilen errechneten, Gewichts-% des jeweiligen Polyisocyantes, bezogen auf 100 Gewichts-% Polyisocyanatzusammensetzung.

**Tabelle 2**

| Zusammensetzung der eingesetzten Polyisocyanatzusammensetzung (a)-1 bis (a)-4 in Gewichtsteilen bzw. in Gewichts-%. | | | | | | |
|---|---|---|---|---|---|---|
| | Isocyanat A | Isocynat B | Isocyanat C | 4,4' MDI [Gewichts- %] | 2,4' MDI [Gewichts -%] | mehrkerniges MDI [Gewichts- %] |
| Polyisocyanatzusammensetzung (a)- 1 | 62,5 | 12,2 | 25,3 | 47,9 | 15,2 | 36,4 |
| Polyisocyanatzusammensetzung (a)-2 | 72,5 | 21,4 | 6,1 | 51,3 | 6,4 | 42,2 |
| Polyisocyanat-zusammensetzung (a)-3 | 69,1 | 24,1 | 6,8 | 53,0 | 6,6 | 40,2 |
| Polyisocyanatzusammensetzung (a)-4 | 65,6 | 26,8 | 7,6 | 54,7 | 6,9 | 38,2 |
| Polyisocyanatzusammensetzung (a)-5 | 58,8 | 32,1 | 9,1 | 58,2 | 7,4 | 34,2 |

Die Ausgangsmaterialien wurden gemäß den Angaben aus den Tabellen 3, 5 und 7 mit Wasser als Treibmittel zu einem Polyurethan-Halbhartschaum verschäumt.

Hierzu wurde aus den angegebenen Polyolen, Katalysatoren und Zusatzstoffen durch Mischung jeweils eine Mischung hergestellt. Die jeweilige Mischung wurde mit der jeweils angegebenen Polyisocyanatzusammensetzung (a)-1 bis (a)-4 bzw. (a)-5 bei dem angegebenen Index miteinander vermischt und in eine offene Form gegeben und dort für 24 Stunden belassen. Nach 24 Stunden wurden die erhaltenen Polyurethan-Halbhartschäume gesägt zur Probenentnahme. Alle Komponente wurden bei Raumtemperatur eingesetzt.

Für die jeweilige Mischung sind in den Tabellen 3, 5 und 7 jeweils die Mengen der eingesetzten Polyole A-E in Gewichtsteilen und ergänzend für die Komponenten (b1) und (b2) der Polyolmischung (b) gemäß Ausführungsform 1 die entsprechend errechneten Gewichts-%, bezogen auf eine Summe von (b1) + (b2) von 100 Gewichts-%, jeweils in der dritt- und zweitletzten Zeile angegeben. In Form eines Graftpolyols mit Anteilen der Komponente (b2) enthaltener, optional derivatisierter, Füllstoff (b3) war als Bestandteil des Polyols D enthalten und die Menge in Gewichtsteilen, bezogen auf 100 Gewichtsteile (b1) + (b2), ist ergänzend in den Tabellen 3 und 5 jeweils in der letzten Zeile angegeben.

Die Eigenschaften der so erhaltenen Polyurethan-Halbhartschäume sind in den folgenden Tabellen 4, 6 und 8 angegeben. V1-V6, sowie V7-V9, waren Vergleichsbeispiele, 1-12, sowie 13 bis 17, stellten erfindungsgemäße Beispiele dar.

**Tabelle 3**

| Einsatzmengen und Bestandteile zur Herstellung der frei verschäumten Polyurethan-Halbhartschäume (Gesamtgewicht der eingesetzten Komponenten Polyisocyanatzusammensetzung, Polyole und Additive ca. 1,3 kg). Angaben in Gewichtsteilen, soweit nicht anders angegeben. | | | | | | | | |
|---|---|---|---|---|---|---|---|---|
| | **V1** | **V2** | **V3** | **1** | **2** | **3** | **4** | **5** |
| Polyol A | | 25 | 80 | 50 | 60 | 70 | 70 | 70 |
| Polyol B | 85 | 60 | 5 | 35 | 25 | 15 | 15 | 15 |
| Polyol D | 15 | 15 | 15 | 15 | 15 | 15 | 15 | 15 |
| Polyol E | 5 | 5 | 5 | 5 | 5 | 5 | 5 | 5 |
| Polyisocyanatzusammensetzung (a)-1 | 0 | 0 | 0 | 0 | 0 | 0 | 147,8 | 0 |
| Polyisocyanatzusammensetzung (a)-2 | 146,7 | 147,4 | 149,0 | 148,1 | 148,4 | 148,7 | 0 | 0 |
| Polyisocyanatzusammensetzung (a)-4 | 0 | 0 | 0 | 0 | 0 | 0 | 0 | 148,1 |
| DC 198 | 1,5 | 1,5 | 1,5 | 1,5 | 1,5 | 1,5 | 1,5 | 1,5 |
| DEOA | 1,8 | 1,8 | 1,8 | 1,8 | 1,8 | 1,8 | 1,8 | 1,8 |
| Jeffcat DPA | 0,6 | 0,6 | 0,6 | 0,6 | 0,6 | 0,6 | 0,6 | 0,6 |
| Kosmos 29 | 0,05 | 0,05 | 0,05 | 0,05 | 0,05 | 0,05 | 0,05 | 0,05 |
| Wasser gesamt* | 10 | 10 | 10 | 10 | 10 | 10 | 10 | 10 |
| Index | 90 | 90 | 90 | 90 | 90 | 90 | 90 | 90 |
| Polyolmischung (b) in Gewichts-% bezogen auf (b1) + (b2) = 100 Gewichts-%: | | | | | | | | |
| (b1) [Gewichts-%] | 0 | 26,8 | 85,8 | 53,6 | 64,3 | 75,1 | 75,1 | 75,1 |
| (b2) [Gewichts-%] | 100 | 73,2 | 14,2 | 46,4 | 35,7 | 24,9 | 24,9 | 24,9 |
| Weitere Gew.-teile Füllstoff SAN (b3) | 6,8 | 6,8 | 6,8 | 6,8 | 6,8 | 6,8 | 6,8 | 6,8 |

| | | | | | | | | |
|---|---|---|---|---|---|---|---|---|
| * "Wasser gesamt" bedeutet die Summe von zugegebenem Wasser und Wasser, welches in anderen Komponenten enthalten war. | | | | | | | | |

Schaum **V3** zeigte ein starkes Absetzten und konnte nicht charakterisiert werden

**Tabelle 4**

| Mechanische Eigenschaften der erhaltenen Halbhartschäume. | | | | | | | | |
|---|---|---|---|---|---|---|---|---|
| | **V1** | **V2** | **V3** | **1** | **2** | **3** | **4** | **5** |
| Raumgewicht [kg/m³] | 15,6 | 14,4 | - | 13,6 | 14,5 | 16,3 | 17,2 | 17,2 |
| Stauchhärte 40% [kPa] (bei erster Stauchung) | 35,5 | 24,1 | - | 19,7 | 20,9 | 29,0 | 23,5 | 27,0 |
| Zugfestigkeit [kPa] | 99 | 59 | - | 72 | 55 | 80 | 74 | 77 |
| Bruchdehnung [%] | 23 | 32 | - | 38 | 36 | 22 | 23 | 24 |
| Rückprallelastizität [%] | 18 | 15 | - | 22 | 22 | 24 | 30 | 30 |
| Luftdurchlässigkeit [dm³/s] | 0,004 | 0,007 | - | 0,063 | 0,027 | 0,168 | 0,147 | 0,318 |
| **AFR [Pa.s/m]** | **59400** | **4170 0** | - | **2780** | **1200** | **813** | **1350** | **511** |

| | | | | | | | | |
|---|---|---|---|---|---|---|---|---|
| "-" nicht bestimmt | | | | | | | | |

Es war gut zu erkennen, dass die erfindungsgemäßen Halbhartschäume der Beispiele 1 bis 5 deutlich bessere akustische Eigenschaften im Hinblick auf eine Schallabsorption aufwiesen als die Vergleichsbeispiele V1 bis V3. So betrug die Luftdurchlässigkeit für die Halbhartschäume der Beispiele 1 bis 5, bestimmt gemäß DIN EN ISO 7231, mindestens 0,02 dm³/s, wohingegen die Halbhartschäume der Vergleichsbeispiele V1 und V2 Luftdurchlässigkeiten von deutlich weniger als 0,02 dm³/s aufwiesen. Ebenso wiesen die erfindungsgemäßen Halbhartschäume der Beispiele 1 bis 5 deutlich bessere Werte hinsichtlich des Luftströmungswiderstandes, bestimmt gemäß DIN EN ISO 9053, auf: 1-5 hatten AFR-Werte von höchstens 10000 Pa.s/m, wohingegen V1 und V2 AFR-Werte deutlich oberhalb von 10000 Pa.s/m, vielmehr deutlich oberhalb von 40000 Pa.s/m, aufwiesen.

**Tabelle 5**

| Einsatzmengen und Bestandteile zur Herstellung der frei verschäumten Polyurethan-Halbhartschäume (Gesamtgewicht der eingesetzten Komponenten Polyisocyanatzusammensetzung, Polyole bzw. Polyolmischung und Additive ca. 1,6 kg). Angaben in Gewichtsteilen, soweit nicht anders angegeben. | | | | | | | | | | |
|---|---|---|---|---|---|---|---|---|---|---|
| | **V4** | **V5** | **V6** | **6** | **7** | **8** | **9** | **10** | **11** | **12** |
| Polyol A | 0 | 25 | 80 | 50 | 60 | 70 | 70 | 70 | 70 | 75 |
| Polyol B | 85 | 60 | 5 | 35 | 25 | 15 | 15 | 15 | 30 | 25 |
| Polyol D | 15 | 15 | 15 | 15 | 15 | 15 | 15 | 15 | 0 | 0 |
| Polyol E | 5 | 5 | 5 | 5 | 5 | 5 | 5 | 5 | 5 | 5 |
| Polyisocyanatzusam-mensetzung (a)-1 | 0 | 0 | 0 | 0 | 0 | 0 | 165, 5 | 0 | 0 | 0 |
| Polyisocyanatzusam-mensetzung (a)-2 | 164, 9 | 165,3 | 167, 0 | 167, 1 | 166, 8 | 166, 6 | 0 | 0 | 166,8 | 166, 7 |
| Polyisocyanatzusammensetzung (a)-3 | 0 | 0 | 0 | 0 | 0 | 0 | 0 | 166, 2 | 0 | 0 |
| Blähgraphit | 20 | 20 | 20 | 20 | 20 | 20 | 20 | 20 | 20 | 20 |
| Exolit AP 422 | 5 | 5 | 5 | 5 | 5 | 5 | 5 | 5 | 5 | 5 |
| DC 198 | 1,5 | 1,5 | 1,5 | 1,5 | 1,5 | 1,5 | 1,5 | 1,5 | 1,5 | 1,5 |
| Sorbidex | 0,5 | 0,5 | 0,5 | 0,5 | 0,5 | 0,5 | 0,5 | 0,5 | 0,5 | 0,5 |
| DEOA | 1,8 | 1,8 | 1,8 | 1,8 | 1,8 | 1,8 | 1,8 | 1,8 | 1,8 | 1,8 |
| Jeffcat DPA | 0,6 | 0,6 | 0,6 | 0,6 | 0,6 | 0,6 | 0,6 | 0,6 | 0,6 | 0,6 |
| Kosmos 29 | 0,05 | 0,05 | 0,05 | 0,05 | 0,05 | 0,05 | 0,05 | 0,05 | 0,05 | 0,05 |
| Wasser gesamt* | 12 | 12 | 12 | 12 | 12 | 12 | 12 | 12 | 12 | 12 |
| Index | 85 | 85 | 85 | 85 | 85 | 85 | 85 | 85 | 85 | 85 |
| Polyolmischung (b) in Gewichts-% bezogen auf (b1) + (b2) = 100 Gewichts-%: | | | | | | | | | | |
| (b1) [Gewichts-%] | - | 26,8 | 85,8 | 53,6 | 64,3 | 75,1 | 75,1 | 75,1 | 70,0 | 75,0 |
| (b2) Polyolmischung (b) in Gewichts-% bezogen auf (b1) + (b2) = 100 Gewichts-%: | 100 | 73,2 | 14,2 | 46,4 | 35,7 | 24,9 | 24,9 | 24,9 | 30,0 | 25,0 |
| Weitere Gew.-teile Füllstoff SAN (b3) | 6,8 | 6,8 | 6,8 | 6,8 | 6,8 | 6,8 | 6,8 | 6,8 | 0 | 0 |

| | | | | | | | | | | |
|---|---|---|---|---|---|---|---|---|---|---|
| * "Wasser gesamt" bedeutet die Summe von zugegebenem Wasser und Wasser, welches in anderen Komponenten enthalten war. | | | | | | | | | | |

Schaum **V5** wies vielen Rissen auf und konnte nicht charakterisiert werden, Schaum V6 zeigte ein starkes Absetzten und konnte ebenfalls nicht charakterisiert werden.

**Tabelle 6**

| Mechanische Eigenschaften der erhaltenen Halbhartschäume. | | | | | | | | | | |
|---|---|---|---|---|---|---|---|---|---|---|
| | **V4** | **V5** | **V6** | **6** | **7** | **8** | **9** | **10** | **11** | **12** |
| Raumgewicht [kg/m³] | 16,9 | - | - | 17,6 | 16,0 | 17,2 | 17,7 | 18,2 | 16,6 | 17,0 |
| Stauchhärte 40% [kPa] (bei erster Stauchung) | 33,5 | - | - | 15,2 | 18,0 | 31,4 | 26,8 | 24,8 | 21,4 | 20,0 |
| Zugfestigkeit [kPa] | 82 | - | - | 35 | 35 | 72 | 69 | 55 | 58 | 62 |
| Bruchdehnung [%] | 21 | - | - | 34 | 24 | 18 | 17 | 17 | 26 | 21 |
| Rückprallelastizität [%] | 15 | - | - | 21 | 26 | 25 | 33 | 30 | 29 | 31 |
| Luftdurchlässigkeit [dm³/s] | 0,01 1 | - | - | 0,26 5 | 0,27 4 | 0,28 8 | 0,21 9 | 0,46 | 0,32 2 | 0,38 2 |
| **AFR [Pa.s/m]** | **1160 0** | - | - | **499** | **359** | **449** | **543** | **246** | **397** | **237** |

| | | | | | | | | | | |
|---|---|---|---|---|---|---|---|---|---|---|
| "-" nicht bestimmt | | | | | | | | | | |

Auch bei Einsatz von Flammschutzmitteln, hier Blähgraphit, war gut zu erkennen, dass die erfindungsgemäßen Halbhartschäume der Beispiele 6 bis 10 deutlich bessere akustische Eigenschaften im Hinblick auf eine Schallabsorption aufwiesen als das Vergleichsbeispiel V4. Die Vergleichsbeispiele V5 und V6 konnten wegen Rissbildung bzw. Absetzung gar nicht charakterisiert werden. So betrug die Luftdurchlässigkeit für die Halbhartschäume der Beispiele 6 bis 10, bestimmt gemäß DIN EN ISO 7231 mindestens 0,02 dm³/s, wohingegen der Halbhartschaum des Vergleichsbeispiels V4 Luftdurchlässigkeiten von deutlich weniger als 0,02 dm³/s aufwies. Ebenso wiesen die erfindungsgemäßen Halbhartschäume der Beispiele 6 bis 10 deutlich bessere Werte hinsichtlich des Luftströmungswiderstandes, bestimmt gemäß DIN EN ISO 9053, auf: 6-10 hatten AFR-Werte von höchstens 10000 Pa.s/m, vielmehr von weniger als 1000 Pa.s/m, wohingegen V4 einen AFR-Werte deutlich oberhalb von 10000 Pa.s/m, vielmehr deutlich oberhalb von 11000 Pa.s/m, aufwies.

**Tabelle 7**

| Einsatzmengen und Bestandteile zur Herstellung der frei verschäumten Polyurethan-Halbhartschäume (Gesamtgewicht der eingesetzten Komponenten Polyisocyanatzusammensetzung, Polyole bzw. Polyolmischung und Additive ca. 1,6 kg). Angaben in Gewichtsteilen, soweit nicht anders angegeben. | | | | | | | | |
|---|---|---|---|---|---|---|---|---|
| | **V7** | **V8** | **V9** | **13** | **14** | **15** | **16** | **17** |
| Polyol A | | | 25 | 50 | 70 | 70 | 70 | 70 |
| Polyol B | 85 | 85 | 60 | 35 | 15 | 15 | 15 | 15 |

| | **V7** | **V8** | **V9** | **13** | **14** | **15** | **16** | **17** |
|---|---|---|---|---|---|---|---|---|
| Polyol D | 15 | 15 | 15 | 15 | 15 | 15 | 15 | 15 |
| Polyol E | 5 | 5 | 5 | 5 | 5 | 5 | 5 | 5 |
| Polyisocyanatzusammensetzung (a)-1 | 0 | 0 | 0 | 0 | 140, 9 | 0 | 0 | 0 |
| Polyisocyanatzusammensetzung (a)-2 | 139, 9 | 0 | 140, 6 | 141, 2 | 0 | 141, 8 | 0 | 0 |
| Polyisocyanatzusammensetzung (a)-4 | 0 | 0 | 0 | 0 | 0 | 0 | 141, 2 | 0 |
| Polyisocyanatzusammensetzung (a)-5 | 0 | 138, 8 | 0 | 0 | 0 | 0 | 0 | 140, 6 |
| Blähgraphit | 20 | 20 | 20 | 20 | 20 | 20 | 20 | 20 |
| Exolit AP 422 | 5 | 5 | 5 | 5 | 5 | 5 | 5 | 5 |
| DC 198 | 1,5 | 1,5 | 1,5 | 1,5 | 1,5 | 1,5 | 1,5 | 1,5 |
| Sorbidex | 0,5 | 0,5 | 0,5 | 0,5 | 0,5 | 0,5 | 0,5 | 0,5 |
| DEOA | 1,8 | 1,8 | 1,8 | 1,8 | 1,8 | 1,8 | 1,8 | 1,8 |
| Jeffcat DPA | 0,6 | 0,6 | 0,6 | 0,6 | 0,6 | 0,6 | 0,6 | 0,6 |
| Kosmos 29 | 0,05 | 0,05 | 0,05 | 0,05 | 0,05 | 0,05 | 0,05 | 0,05 |
| Wasser gesamt* | 10 | 10 | 10 | 10 | 10 | 10 | 10 | 10 |
| Index | 85 | 85 | 85 | 85 | 85 | 85 | 85 | 85 |
| Polyolmischung (b) in Gewichts-% bezogen auf (b1) + (b2) = 100 Gewichts-%: | | | | | | | | |
| (b1) [Gewichts-%] | 0 | 0 | 26,8 | 53,6 | 75,1 | 75,1 | 75,1 | 75,1 |
| (b2) Polyolmischung (b) in Gewichts-% bezogen auf (b1) + (b2) = 100 Gewichts-%: | 100 | 100 | 73,2 | 46,4 | 24,9 | 24,9 | 24,9 | 24,9 |
| Weitere Gew.-teile Füllstoff SAN (b3) | 6,8 | 6,8 | 6,8 | 6,8 | 6,8 | 6,8 | 6,8 | 6,8 |

| | | | | | | | | |
|---|---|---|---|---|---|---|---|---|
| * "Wasser gesamt" bedeutet die Summe von zugegebenem Wasser und Wasser, welches in anderen Komponenten enthalten war. | | | | | | | | |

Schaum V8 wies vielen Rissen auf und konnte nicht charakterisiert werden.

**Tabelle 8**

| Mechanische Eigenschaften der erhaltenen Halbhartschäume. | | | | | | | | |
|---|---|---|---|---|---|---|---|---|
| | **V7** | **V8** | **V9** | **13** | **14** | **15** | **16** | **17** |
| Raumgewicht [kg/m³] | 18,3 | - | 17,0 | 16,7 | 18,1 | 18,1 | 18,4 | 18,6 |
| Stauchhärte 40% [kPa] (bei erster Stauchung) | 31,6 | - | 18,5 | 15,1 | 20,6 | 21,3 | 21,5 | 20,1 |
| Zugfestigkeit [kPa] | 77 | - | 66 | 50 | 64 | 63 | 60 | 70 |

| | **V7** | **V8** | **V9** | **13** | **14** | **15** | **16** | **17** |
|---|---|---|---|---|---|---|---|---|
| Bruchdehnung [%] | 27 | - | 30 | 38 | 25 | 22 | 22 | 24 |
| Rückprallelastizität [%] | 18 | - | 21 | 26 | 27 | 26 | 26 | 29 |
| Luftdurchlässigkeit [dm³/s] | 0,00 8 | - | 0,00 9 | 0,04 6 | 0,20 7 | 0,13 9 | 0,33 4 | 0,66 8 |
| **AFR [Pa.s/m]** | **2230 0** | - | **3310 0** | **2610** | **579** | **546** | **361** | **200** |

| | | | | | | | | |
|---|---|---|---|---|---|---|---|---|
| "-" nicht bestimmt | | | | | | | | |

Im Vergleich zeigten die erfindungsgemäßen Halbhartschäume der Beispiele 13-17 ebenfalls deutlich bessere akustische Eigenschaften im Hinblick auf eine Schallabsorption als die Vergleichsbeispiele V7 und V9. Das Vergleichsbeispiel V8 konnte wegen Rissbildung gar nicht charakterisiert werden. So betrug die Luftdurchlässigkeit für die Halbhartschäume der Beispiele 13 bis 17, bestimmt gemäß DIN EN ISO 7231 mindestens 0,02 dm³/s, wohingegen der Halbhartschaum der Vergleichsbeispiele V7 und V9 Luftdurchlässigkeiten von deutlich weniger als 0,02 dm³/s aufwies. Ebenso wiesen die erfindungsgemäßen Halbhartschäume der Beispiele 13 bis 17 deutlich bessere Werte hinsichtlich des Luftströmungswiderstandes, bestimmt gemäß DIN EN ISO 9053, auf: 13-17 hatten AFR-Werte von deutlich weniger als 10000 Pa.s/m, wohingegen V7 und V9 AFR-Werte deutlich oberhalb von 10000 Pa.s/m, vielmehr deutlich oberhalb von 10000 Pa.s/m, aufwiesen. Innerhalb der erfindungsgemäßen Halbhartschäume der Beispiele 14-17 war weiterhin zu erkennen, dass die Zusammensetzung der Polyisocyanat-Mischung einen Effekt hatte: So zeigte Beispiel 14, welches mit Polyisocyanatzusammensetzung (a)-1 erzeugt worden war (weniger als 50 Gewichts-% an 4,4'-MDI und mehr als 10 Gewichts-% 2,4'-MDI, jeweils bezogen auf 100 Gewichts-% Polyisocyanatzusammensetzung), zwar einen guten AFR-Wert. Im Vergleich hierzu waren die AFR-Werte der Beispiele 15, 16 und 17, deren jeweilige Polyisocyanatzusammensetzung mehr als 50 Gewichts-% an 4,4'-MDI und weniger als 10 Gewichts-% 2,4'-MDI, jeweils bezogen auf 100 Gewichts-% der Polyisocyanatzusammensetzung, umfasste, noch deutlich verbessert und lagen unterhalb von 200 Pa.s/m, bevorzugt unterhalb von 100 Pa.s/m. Der Abgleich mit Vergleichsbeispiel V8, welches zwar eine passende Polyisocyanatzusammensetzung (a)-5, aber nicht in Verbindung mit einer passenden Polyolmischung, aufwies, zeigte, dass der Effekt der Zusammensetzung der Polyisocyanat-Mischung nur in Synergie mit der Polyolmischung gegeben war - Schaum V8 wies viele Risse auf und konnte nicht charakterisiert werden.

### Angeführte Literatur

WO 2019/002013 A1
EP 1 664 147 B1
EP 2 800 770 B2
EP 1 230 297 B1
WO 2009/003964 A1
WO 2009/138379 A1
Dow Polyurethanes Flexible Foams", 2. Auflage 1997, Kapitel 2.
DE 4318120 A1
WO 2006/034800 A1
"Kunststoffhandbuch, 7, Polyurethane", Carl Hanser-Verlag, 3. Auflage 1993, Kapitel 3.1
DE 10314762 A1
"Kunststoffhandbuch, Band 7, Polyurethane", Carl Hanser Verlag, 3. Auflage 1993, Kapitel 3.4

## Patentansprüche

1. Verfahren zur Herstellung eines Polyurethan-Schaumes, umfassend die Umsetzung von:
(a) einer Isocyanatzusammensetzung umfassend mindestens ein Polyisocyanat auf Basis von Diphenylmethandiisocyanat;
(b) einer Polyolmischung umfassend
(b1) 50 bis 85 Gewichts-% mindestens eines Polyetherpolyols mit einer Hydroxylzahl im Bereich von 10 bis 60 mg KOH/g, einer OH-Funktionalität von mehr als 2 und einem Ethylenoxidanteil im Bereich von 50 bis 100 Gewichts-%, bezogen auf den Gehalt an Alkylenoxid des mindestens einen Polyetherpolyols,
(b2) 15 bis 50 Gewichts-% mindestens eines Polyetherpolyols mit einer Hydroxylzahl im Bereich von 10 bis 100 mg KOH/g, einer OH-Funktionalität von mehr als 2, einem Ethylenoxidanteil im Bereich von 2 bis 30 Gewichts-%, bezogen auf den Gehalt an Alkylenoxid des mindestens einen Polyetherpolyols, und einem Anteil an primären OH-Gruppen von 40 bis 100 % bezogen auf die Gesamtzahl der OH-Gruppen in dem mindestens einen Polyetherpolyol,
jeweils bezogen auf die gesamte Gewichtsmenge der Bestandteile (b1) und (b2), die 100 Gewichts-% ergibt;
sowie
(b3) 0 bis 20 weitere Gewichtsteile eines, optional derivatisierten, Füllstoffs, bezogen auf 100 Gewichtsteile der Komponenten (b1) und (b2), gegebenenfalls enthalten als Bestandteil eines Graftpolyols auf Basis einer oder mehrerer der Komponenten (b1) und (b2);
(c) einer Treibmittelzusammensetzung umfassend Wasser;
wobei bei der Umsetzung die Treibmittelzusammensetzung (c) in einem gewichtsbasierten Verhältnis Gewicht Treibmittelzusammensetzung (c) : Gesamtgewicht aller bei der Umsetzung eingesetzten Isocyanat-reaktiven Verbindungen im Bereich von 1:14 bis 1:6 eingesetzt wird;
wobei ein Polyurethan-Schaum aufweisend ein Raumgewicht, bestimmt nach DIN EN ISO 845 (Oktober 2009), von höchstens 25 kg/m³, und eine Stauchhärte, bestimmt bei 40 % Stauchung bei erster Stauchung gemäß DIN EN ISO 3386-1 (Oktober 2015), im Bereich von 10 bis 80 kPa, erhalten wird.

2. Verfahren nach Anspruch 1, wobei die Polyolmischung (b) das mindestens eine Polyetherpolyol (b1) im Bereich von 60 bis 82 Gewichts-%, bevorzugt im Bereich von 65 bis 80 Gewichts-%, weiter bevorzugt im Bereich von 68 bis 78 Gewichts-%, weiter bevorzugt im Bereich von 70 bis 75 Gewichts-%, umfasst, bezogen auf die gesamte Gewichtsmenge der Bestandteile (b1) und (b2), die 100 Gewichts-% ergibt; und/oder wobei die Polyolmischung (b) das mindestens eine Polyetherpolyol (b2) im Bereich von 18 bis 40 Gewichts-%, bevorzugt im Bereich von 21 bis 32 Gewichts-%, noch mehr bevorzugt 25 bis 30 Gewichts-% umfasst, bezogen auf die gesamte Gewichtsmenge der Bestandteile (b1) und (b2), die 100 Gewichts-% ergibt.

3. Verfahren nach Anspruch 1 oder 2, wobei der optional derivatisierte Füllstoff gemäß (b3) als Bestandteil eines Graftpolyols auf Basis eines Polyetherpolyols (b2), bevorzugt in einer Menge im Bereich von 0,01 bis 20 weiteren Gewichtsteilen, weiter bevorzugt im Bereich von 1 bis 10 weiteren Gewichtsteilen, bezogen auf 100 Gewichtsteile der Komponenten (b1) und (b2), und/oder der Füllstoff gemäß (b3) als Dispersion in einem Polyetherpolyol (b2), bevorzugt in einer Menge im Bereich von 0,01 bis 20 weiteren Gewichtsteilen, weiter bevorzugt im Bereich von 1 bis 10 weiteren Gewichtsteilen, weiter bevorzugt im Bereich von 3 bis 8 weiteren Gewichtsteilen, bezogen auf 100 Gewichtsteile der Komponenten (b1) und (b2),
vorliegt.

4. Verfahren nach einem der Ansprüche 1 bis 3, wobei das Polyetherpolyol (b1) eine OH-Funktionalität im Bereich von 2,2 bis 8, bevorzugt im Bereich von 2,2 bis 4, weiter bevorzugt im Bereich von 2,4 bis 3,3, aufweist; und/oder wobei das Polyetherpolyol (b1) einen Anteil an primären OH-Gruppen im Bereich von 40 bis 100 %, bevorzugt im Bereich von 70 bis 90 %, bezogen auf die Gesamtzahl der OH-Gruppen des Polyetherpolyols (b1), aufweist.

5. Verfahren nach einem der Ansprüche 1 bis 4, wobei das Polyetherpolyol (b2) einen Anteil an primären OH-Gruppen im Bereich von 50 bis 100 %, bevorzugt im Bereich von 70 bis 90 %, bezogen auf die Gesamtzahl der OH-Gruppen des Polyetherpolyols (b2), aufweist; und/oder wobei das Polyetherpolyol (b2) eine OH-Funktionalität im Bereich von 2,2 bis 8, bevorzugt im Bereich von 2,2 bis 4, weiter bevorzugt im Bereich von 2,4 bis 3,3 aufweist.

6. Verfahren nach einem der Ansprüche 1 bis 5, wobei die Isocyanatzusammensetzung (a) im Bereich von 50 bis 64 Gewichts-%, bevorzugt im Bereich von 54 bis 62 Gewichts-%, weiter bevorzugt im Bereich von 57 bis 62 Gewichts-%, 4,4`-Diphenylmethandiisocyanat (4,4'-MDI), bezogen auf 100 Gewichts-% Isocyanatzusammensetzung (a), umfasst; und/oder, bevorzugt und, wobei die Isocyanatzusammensetzung (a) jeweils im Bereich von 2 bis 10 Gewichts-% 2,4`-Diphenylmethandiisocyanat (2,4'-MDI), bezogen auf 100 Gewichts-% Isocyanatzusammensetzung (a), umfasst.

7. Verfahren nach einem der Ansprüche 1 bis 6, wobei die Polyolmischung (b) weiter umfasst:
(b4) mindestens ein weiteres Polyetherpolyol, welches sich von dem mindestens einen Polyetherpolyol gemäß (b1) und von dem mindestens einen Polyetherpolyol gemäß (b2) unterscheidet und eine Hydroxylzahl von mehr als 350 mg KOH/g, bevorzugt im Bereich von 350 bis 800 mg KOH/g, aufweist, bevorzugt in einer Menge im Bereich von 0 bis 20 weiteren Gewichtsteilen, weiter bevorzugt im Bereich von 3 bis 15 weiteren Gewichtsteilen, weiter bevorzugt 5 bis 10 weiteren Gewichtsteilen, bezogen auf 100 Gewichtsteile der Komponenten (b1) und (b2).

8. Verfahren nach einem der Ansprüche 1 bis 7, wobei die Polyolmischung (b) zu höchstens 5 weiteren Gewichtsteilen, bevorzugt im Bereich von 0 bis 5 weiteren Gewichtsteilen, weiter bevorzugt im Bereich von 0 bis 3 weiteren Gewichtsteilen, weiter bevorzugt im Bereich von 0 bis 1 weiteren Gewichtsteilen, bezogen auf 100 Gewichtsteile der Komponenten (b1) und (b2), ein weiteres Polyetherpolyol (b5) enthält, wobei (b5) eine Hydroxylzahl im Bereich von 10 bis 100 mg KOH/g, eine OH-Funktionalität von mindestens 2, einen Ethylenoxidanteil von 0 bis 30 Gewichts-% bezogen auf den Gehalt an Alkylenoxid und einen Anteil an primären OH-Gruppen von 0 bis 30 % bezogen auf die Gesamtzahl der OH-Gruppen im Polyetherpolyol (b5), aufweist.

9. Verfahren nach einem der Ansprüche 1 bis 8, wobei bei der Umsetzung die Treibmittelzusammensetzung (c) in einem gewichtsbasierten Verhältnis zum Gesamtgewicht aller in der Umsetzung eingesetzten Isocyanat-reaktiven Verbindungen im Bereich von 1:12 bis 1:7, bevorzugt im Bereich von 1:11 bis 1:8, eingesetzt wird.

10. Verfahren nach einem der Ansprüche 1 bis 9, wobei frei geschäumt wird.

11. Polyurethan-Schaum, erhalten oder erhältlich nach dem Verfahren gemäß einem der Ansprüche 1 bis 10.

12. Polyurethan-Schaum nach Anspruch 11, aufweisend eine Luftdurchlässigkeit bestimmt gemäß DIN EN ISO 7231 (Dezember 2010) von mindestens 0,02 dm³/s, bevorzugt im Bereich von 0,02 bis 1 dm³/s, weiter bevorzugt im Bereich von 0,05 bis 1 dm³/s;
und/oder
einen Luftströmungswiderstand (Air Flow Resistance, AFR) bestimmt gemäß DIN EN ISO 9053-1 (März 2019) von höchstens 10000 Pa.s/m, bevorzugt im Bereich von 10 bis 10000 Pa.s/m, weiter bevorzugt im Bereich von 100 bis 5000 Pa.s/m, weiter bevorzugt im Bereich von 100 bis 1500 Pa.s/m, weiter bevorzugt im Bereich von 100 bis 1000 Pa.s/m; und/oder
eine Stauchhärte, bestimmt bei 40 % Stauchung bei erster Stauchung gemäß DIN EN ISO 3386-1 (Oktober 2015), im Bereich von 10 bis 80 kPa, bevorzugt im Bereich von 15 bis 80 kPa;
und/oder
ein Raumgewicht, bestimmt nach DIN EN ISO 845 (Oktober 2009), von höchstens 25 kg/m³, bevorzugt im Bereich von 10 bis 20 kg/m³, weiter bevorzugt im Bereich von 12 bis 18 kg/m³;
und/oder
eine Rückprallelastizität bestimmt nach DIN EN ISO 8307 (Dezember 2018) im Bereich von 15 bis 35 %, bevorzugt im Bereich von 18 bis 33 %, weiter bevorzugt im Bereich von 22 bis 30 %.

13. Verwendung eines Polyurethan-Schaums gemäß Anspruch 11 oder 12 als Schallabsorptionsmaterial, bevorzugt in einem Verkehrsmittel, bevorzugt in einem mobilen Verkehrsmittel, weiter bevorzugt in einem mobilen Verkehrsmittel zur Bewegung von Personen und/oder Gütern, wobei das Verkehrsmittel weiter bevorzugt ausgewählt ist aus der Gruppe bestehend aus Flugzeug, Schiff, Schienenfahrzeug, Lastkraftwagen und Automobil; weiter bevorzugt als Bestandteil einer Verkleidung in einem Verkehrsmittel im Innenbereich, im Motorraum oder im Außenbereich; weiter bevorzugt im Automobilinnenbereich als Verkleidung einer Wand, einer Tür, eines Dachs oder im Motorraum.

14. Schallabsorptionsmaterial, umfassend einen Polyurethan-Schaum nach Anspruch 11 oder 12, bevorzugt bestehend aus einem Polyurethan-Schaum nach Anspruch 11 oder 12.

15. Verwendung einer Polyolmischung (b) umfassend:
(b1) 50 bis 85 Gewichts-% mindestens eines Polyetherpolyols mit einer Hydroxylzahl im Bereich von 10 bis 60 mg KOH/g, einer OH-Funktionalität von mehr als 2 und einem Ethylenoxidanteil im Bereich von 50 bis 100 Gewichts-%, bezogen auf den Gehalt an Alkylenoxid des mindestens einen Polyetherpolyols,
(b2) 15 bis 50 Gewichts-% mindestens eines Polyetherpolyols mit einer Hydroxylzahl im Bereich von 10 bis 100 mg KOH/g, einer OH-Funktionalität von mehr als 2, einem Ethylenoxidanteil im Bereich von 2 bis 30 Gewichts-%, bezogen auf den Gehalt an Alkylenoxid des mindestens einen Polyetherpolyols, und einem Anteil an primären OH-Gruppen von 40 bis 100 % bezogen auf die Gesamtzahl der OH-Gruppen in dem mindestens einen Polyetherpolyol,
jeweils bezogen auf die gesamte Gewichtsmenge der Bestandteile (b1) und (b2), die 100 Gewichts-% ergibt;
sowie
(b3) 0 bis 20 weitere Gewichtsteile eines, optional derivatisierten, Füllstoffs, bezogen auf 100 Gewichtsteile der Komponenten (b1) und (b2), gegebenenfalls enthalten als Bestandteil eines Graftpolyols auf Basis einer oder mehrerer der Komponenten (b1) und (b2);
zur Herstellung eines Polyurethan-Schaums, bevorzugt eines Polyurethan-Schaums, der mindestens eine der folgenden Eigenschaften aufweist:
- eine Luftdurchlässigkeit bestimmt gemäß DIN EN ISO 7231 (Dezember 2012) von mindestens 0,02 dm³/s, bevorzugt im Bereich von 0,02 bis 1 dm³/s, weiter bevorzugt im Bereich von 0,05 bis 1 dm³/s;
- einen Luftströmungswiderstand (Air Flow Resistance, AFR) bestimmt gemäß DIN EN ISO 9053-1 (März 2019) von höchstens 10000 Pa s/m, bevorzugt im Bereich von 10 bis 10000 Pa s/m, weiter bevorzugt im Bereich von 100 bis 5000 Pa s/m, weiter bevorzugt im Bereich von 100 bis 1500 Pa.s/m, weiter bevorzugt im Bereich von 100 bis 1000 Pa.s/m;
- eine Stauchhärte, bestimmt bei 40 % Stauchung bei erster Stauchung gemäß DIN EN ISO 3386-1 (Oktober 2015), im Bereich von 10 bis 80 kPa, bevorzugt im Bereich von 15 bis 80 kPa;
- ein Raumgewicht, bestimmt nach DIN EN ISO 845 (Oktober 2009), von höchstens 25 kg/m³, bevorzugt im Bereich von10 bis 20 kg/m³, weiter bevorzugt im Bereich von 12 bis 18 kg/m³;
- eine Rückprallelastizität bestimmt nach DIN EN ISO 8307 (Dezember 2018) im Bereich von 15 bis 35 %, bevorzugt im Bereich von 18 bis 33 %, weiter bevorzugt im Bereich von 22 bis 30 %.

## Claims

1. A process for producing a polyurethane foam, comprising the reaction of:
(a) an isocyanate composition comprising at least one polyisocyanate based on diphenylmethane diisocyanate;
(b) a polyol mixture comprising
(b1) 50% to 85% by weight of at least one polyether polyol having a hydroxyl value in the range from 10 to 60 mg KOH/g, an OH functionality of more than 2, and an ethylene oxide proportion in the range from 50% to 100% by weight based on the alkylene oxide content of the at least one polyether polyol,
(b2) 15% to 50% by weight of at least one polyether polyol having a hydroxyl value in the range from 10 to 100 mg KOH/g, an OH functionality of more than 2, an ethylene oxide proportion in the range from 2% to 30% by weight based on the alkylene oxide content of the at least one polyether polyol, and a proportion of primary OH groups of 40 to 100% based on the total number of OH groups in the at least one polyether polyol,
in each case based on the total amount by weight of constituents (b1) and (b2), which adds up to 100% by weight;
and
(b3) 0 to 20 further parts by weight of an optionally derivatized filler, based on 100 parts by weight of components (b1) and (b2), optionally present as a constituent of a graft polyol based on one or more of components (b1) and (b2);
(c) a blowing agent composition comprising water;
wherein the reaction employs the blowing agent composition (c) in a weight-based ratio of the weight of blowing agent composition (c) to the total weight of all isocyanate-reactive compounds used in the reaction in the range from 1:14 to 1:6;
wherein a polyurethane foam having a foam density, determined according to DIN EN ISO 845 (October 2009), of not more than 25 kg/m³ and a compression hardness, determined at 40% compression in the first compression in accordance with DIN EN ISO 3386-1 (October 2015), in the range from 10 to 80 kPa is obtained.

2. The process according to claim 1, wherein the polyol mixture (b) comprises the at least one polyether polyol (b1) in the range from 60% to 82% by weight, preferably in the range from 65% to 80% by weight, more preferably in the range from 68% to 78% by weight, more preferably in the range from 70% to 75% by weight, based on the total amount by weight of constituents (b1) and (b2), which adds up to 100% by weight; and/or wherein the polyol mixture (b) comprises the at least one polyether polyol (b2) in the range from 18% to 40% by weight, preferably in the range from 21% to 32% by weight, even more preferably 25% to 30% by weight, based on the total amount by weight of constituents (b1) and (b2), which adds up to 100% by weight.

3. The process according to claim 1 or 2, wherein the optionally derivatized filler according to (b3) is present as a constituent of a graft polyol based on a polyether polyol (b2), preferably in an amount in the range from 0.01 to 20 further parts by weight, more preferably in the range from 1 to 10 further parts by weight, based on 100 parts by weight of components (b1) and (b2), and/or the filler according to (b3) is present as a dispersion in a polyether polyol (b2), preferably in an amount in the range from 0.01 to 20 further parts by weight, more preferably in the range from 1 to 10 further parts by weight, more preferably in the range from 3 to 8 further parts by weight, based on 100 parts by weight of components (b1) and (b2).

4. The process according to any of claims 1 to 3, wherein the polyether polyol (b1) has an OH functionality in the range from 2.2 to 8, preferably in the range from 2.2 to 4, more preferably in the range from 2.4 to 3.3; and/or wherein the polyether polyol (b1) has a proportion of primary OH groups in the range from 40 to 100%, preferably in the range from 70 to 90%, based on the total number of OH groups in the polyether polyol (b1).

5. The process according to any of claims 1 to 4, wherein the polyether polyol (b2) has a proportion of primary OH groups in the range from 50 to 100%, preferably in the range from 70 to 90%, based on the total number of OH groups in the polyether polyol (b2); and/or wherein the polyether polyol (b2) has an OH functionality in the range from 2.2 to 8, preferably in the range from 2.2 to 4, more preferably in the range from 2.4 to 3.3.

6. The process according to any of claims 1 to 5, wherein the isocyanate composition (a) comprises in the range from 50% to 64% by weight, preferably in the range from 54% to 62% by weight, more preferably in the range from 57% to 62% by weight, of 4,4'-diphenylmethane diisocyanate (4,4'-MDI), based on 100% by weight of isocyanate composition (a); and/or, preferably and, wherein the isocyanate composition (a) respectively comprises in the range from 2% to 10% by weight of 2,4'-diphenylmethane diisocyanate (2,4'-MDI) based on 100% by weight of isocyanate composition (a).

7. The process according to any of claims 1 to 6, wherein the polyol mixture (b) further comprises:
(b4) at least one further polyether polyol that differs from the at least one polyether polyol according to (b1) and from the at least one polyether polyol according to (b2) and has a hydroxyl value of more than 350 mg KOH/g, preferably in the range from 350 to 800 mg KOH/g, preferably in an amount in the range from 0 to 20 further parts by weight, more preferably in the range from 3 to 15 further parts by weight, more preferably 5 to 10 further parts by weight, based on 100 parts by weight of components (b1) and (b2).

8. The process according to any of claims 1 to 7, wherein the polyol mixture (b) comprises not more than 5 further parts by weight, preferably in the range from 0 to 5 further parts by weight, more preferably in the range from 0 to 3 further parts by weight, more preferably in the range from 0 to 1 further parts by weight, based on 100 parts by weight of components (b1) and (b2), of a further polyether polyol (b5), where (b5) has a hydroxyl value in the range from 10 to 100 mg KOH/g, an OH functionality of at least 2, an ethylene oxide proportion of 0% to 30% by weight based on the alkylene oxide content, and a proportion of primary OH groups of 0 to 30% based on the total number of OH groups in the polyether polyol (b5).

9. The process according to any of claims 1 to 8, wherein the reaction employs the blowing agent composition (c) in a weight-based ratio to the total weight of all isocyanate-reactive compounds used in the reaction in the range from 1:12 to 1:7, preferably in the range from 1:11 to 1:8.

10. The process according to any of claims 1 to 9, wherein free-rise foaming is carried out.

11. A polyurethane foam obtained or obtainable by the process according to any of claims 1 to 10.

12. The polyurethane foam according to claim 11, having an air permeability determined in accordance with DIN EN ISO 7231 (December 2010) of at least 0.02 dm³/s, preferably in the range from 0.02 to 1 dm³/s, more preferably in the range from 0.05 to 1 dm³/s;
and/or
an air flow resistance (AFR) determined in accordance with DIN EN ISO 9053-1 (March 2019) of not more than 10 000 Pa s/m, preferably in the range from 10 to 10 000 Pa s/m, more preferably in the range from 100 to 5000 Pa s/m, more preferably in the range from 100 to 1500 Pa s/m, more preferably in the range from 100 to 1000 Pa s/m;
and/or
a compression hardness, determined at 40% compression in the first compression in accordance with DIN EN ISO 3386-1 (October 2015), in the range from 10 to 80 kPa, preferably in the range from 15 to 80 kPa;
and/or
a foam density, determined according to DIN EN ISO 845 (October 2009), of not more than 25 kg/m³, preferably in the range from 10 to 20 kg/m³, more preferably in the range from 12 to 18 kg/m³;
and/or
a resilience, determined according to DIN EN ISO 8307 (December 2018), in the range from 15 to 35%, preferably in the range from 18 to 33%, more preferably in the range from 22 to 30%.

13. The use of a polyurethane foam according to claim 11 or 12 as a sound absorption material, preferably in a means of transport, preferably in a mobile means of transport, more preferably in a mobile means of transport for moving people and/or goods, the means of transport more preferably being selected from the group consisting of aircraft, ship, rail vehicle, truck, and automobile; more preferably as a component of cladding in the interior, engine compartment or exterior of a means of transport; more preferably in the interior of an automobile as cladding for a wall, a door, a roof or in the engine compartment.

14. A sound absorption material comprising a polyurethane foam according to claim 11 or 12, preferably consisting of a polyurethane foam according to claim 11 or 12.

15. The use of a polyol mixture (b) comprising:
(b1) 50% to 85% by weight of at least one polyether polyol having a hydroxyl value in the range from 10 to 60 mg KOH/g, an OH functionality of more than 2, and an ethylene oxide proportion in the range from 50% to 100% by weight based on the alkylene oxide content of the at least one polyether polyol,
(b2) 15% to 50% by weight of at least one polyether polyol having a hydroxyl value in the range from 10 to 100 mg KOH/g, an OH functionality of more than 2, an ethylene oxide proportion in the range from 2% to 30% by weight based on the alkylene oxide content of the at least one polyether polyol, and a proportion of primary OH groups of 40 to 100% based on the total number of OH groups in the at least one polyether polyol,
in each case based on the total amount by weight of constituents (b1) and (b2), which adds up to 100% by weight;
and
(b3) 0 to 20 further parts by weight of an optionally derivatized filler, based on 100 parts by weight of components (b1) and (b2), optionally present as a constituent of a graft polyol based on one or more of components (b1) and (b2);
for the production of a polyurethane foam, preferably a polyurethane foam having at least one of the following properties:
- an air permeability determined in accordance with DIN EN ISO 7231 (December 2012) of at least 0.02 dm³/s, preferably in the range from 0.02 to 1 dm³/s, more preferably in the range from 0.05 to 1 dm³/s;
- an air flow resistance (AFR) determined in accordance with DIN EN ISO 9053-1 (March 2019) of not more than 10 000 Pa s/m, preferably in the range from 10 to 10 000 Pa s/m, more preferably in the range from 100 to 5000 Pa s/m, more preferably in the range from 100 to 1500 Pa s/m, more preferably in the range from 100 to 1000 Pa s/m;
- a compression hardness, determined at 40% compression in the first compression in accordance with DIN EN ISO 3386-1 (October 2015), in the range from 10 to 80 kPa, preferably in the range from 15 to 80 kPa;
- a foam density, determined according to DIN EN ISO 845 (October 2009), of not more than 25 kg/m³, preferably in the range from 10 to 20 kg/m³, more preferably in the range from 12 to 18 kg/m³;
- a resilience, determined according to DIN EN ISO 8307 (December 2018), in the range from 15 to 35%, preferably in the range from 18 to 33%, more preferably in the range from 22 to 30%.

## Revendications

1. Procédé pour la production d'une mousse de polyuréthane, comprenant la mise en réaction de :
(a) une composition d'isocyanate comprenant au moins un polyisocyanate à base de diisocyanate de diphénylméthane ;
(b) un mélange de polyols comprenant
(b1) 50 à 85 % en poids d'au moins un polyétherpolyol ayant un indice d'hydroxyle dans la plage de 10 à 60 mg de KOH/g, une fonctionnalité OH de plus de 2 et une teneur en oxyde d'éthylène dans la plage de 50 à 100 % en poids, par rapport à la teneur en oxyde d'alkylène dudit au moins un polyétherpolyol,
(b2) 15 à 50 % en poids d'au moins un polyétherpolyol ayant un indice d'hydroxyle dans la plage de 10 à 100 mg de KOH/g, une fonctionnalité OH de plus de 2, un teneur en oxyde d'éthylène dans la plage de 2 à 30 % en poids, par rapport à la teneur en oxyde d'alkylène dudit au moins un polyétherpolyol, et un proportion de groupes OH primaires de 40 à 100 % par rapport au nombre total des groupes OH dans ledit au moins un polyétherpolyol,
respectivement par rapport à la quantité totale en poids des constituants (b1) et (b2), qui est ainsi égale à 100 % en poids ;
ainsi que
(b3) 0 à 20 parties en poids supplémentaires d'une charge, en option transformée en dérivé, par rapport à 100 parties en poids des composants (b1) et (b2), éventuellement contenue en tant que constituant d'un polyol greffé à base d'un ou de plusieurs des composants (b1) et (b2) ;
(c) une composition d'agent porogène comprenant de l'eau ;
la composition d'agent porogène (c) étant utilisée dans la réaction en un rapport pondéral poids de composition d'agent porogène (c) : poids total de tous les composés réactifs avec les isocyanates, utilisés dans la réaction, dans la plage de 1:14 à 1:6 ;
avec obtention d'une mousse de polyuréthane présentant une masse volumique, déterminée selon DIN EN ISO 845 (octobre 2009), d'au maximum 25 kg/m³, et une dureté à la compression, déterminée à une compression de 40 % lors d'une première compression selon DIN EN ISO 3386-1 (octobre 2015), dans la plage de 10 à 80 kPa.

2. Procédé selon la revendication 1, dans lequel le mélange de polyols (b) comprend ledit au moins un polyétherpolyol (b1) dans la plage de 60 à 82 % en poids, de préférence dans la plage de 65 à 80 % en poids, encore mieux dans la plage de 68 à 78 % en poids, encore mieux dans la plage de 70 à 75 % en poids, par rapport à la quantité totale en poids des constituants (b1) et (b2), qui est ainsi égale à 100 % en poids ; et/ou dans lequel le mélange de polyols (b) comprend ledit au moins un polyétherpolyol (b2) dans la plage de 18 à 40 % en poids, de préférence dans la plage de 21 à 32 % en poids, encore plus préférablement 25 à 30 % en poids, par rapport à la quantité totale en poids des constituants (b1) et (b2), qui est ainsi égale à 100 % en poids.

3. Procédé selon la revendication 1 ou 2, dans lequel la charge en option transformée en dérivé selon (b3) en tant que constituant d'un polymère greffé à base d'un polyétherpolyol (b2) est présente de préférence en une quantité dans la plage de 0,01 à 20 parties en poids supplémentaires, encore mieux dans la plage de 1 à 10 parties en poids supplémentaires, par rapport à 100 parties en poids des composants (b1) et (b2), et/ou la charge selon (b3) est présente sous forme de dispersion dans un polyétherpolyol (b2), de préférence en une quantité dans la plage de 0,01 à 20 parties en poids supplémentaires, encore mieux dans la plage de 1 à 10 parties en poids supplémentaires, encore mieux dans la plage de 3 à 8 parties en poids supplémentaires, par rapport à 100 parties en poids des composants (b1) et (b2) .

4. Procédé selon l'une quelconque des revendications 1 à 3, dans lequel le polyétherpolyol (b1) présente une fonctionnalité OH dans la plage de 2,2 à 8, de préférence dans la plage de 2,2 à 4, encore mieux dans la plage de 2,4 à 3,3 ; et/ou dans lequel le polyétherpolyol (b1) présente une proportion de groupes OH primaires dans la plage de 40 à 100 %, de préférence dans la plage de 70 à 90 %, par rapport au nombre total des groupes OH du polyétherpolyol (b1).

5. Procédé selon l'une quelconque des revendications 1 à 4, dans lequel le polyétherpolyol (b2) présente une proportion de groupes OH primaires dans la plage de 50 à 100 %, de préférence dans la plage de 70 à 90 %, par rapport au nombre total des groupes OH du polyétherpolyol (b2) ; et/ou dans lequel le polyétherpolyol (b2) présente une fonctionnalité OH dans la plage de 2,2 à 8, de préférence dans la plage de 2,2 à 4, encore mieux dans la plage de 2,4 à 3,3.

6. Procédé selon l'une quelconque des revendications 1 à 5, dans lequel la composition d'isocyanate (a) comprend du 4,4'-diisocyanate de diphénylméthane (4,4'-MDI) dans la plage de 50 à 64 % en poids, de préférence dans la plage de 54 à 62 % en poids, encore mieux dans la plage de 57 à 62 % en poids, par rapport à 100 % en poids de composition d'isocyanate (a) ; et/ou, de préférence et, dans lequel la composition d'isocyanate (a) comprend respectivement du 2,4'-diisocyanate de diphénylméthane (2,4'-MDI) dans la plage de 2 à 10 % en poids, par rapport à 100 % en poids de composition d'isocyanate (a).

7. Procédé selon l'une quelconque des revendications 1 à 6, dans lequel le mélange de polyols (b) comprend encore :
(b4) au moins un polyétherpolyol supplémentaire, qui diffère dudit au moins un polyétherpolyol selon (b1) et dudit au moins un polyétherpolyol selon (b2) et présente un indice d'hydroxyle de plus de 350 mg de KOH/g, de préférence dans la plage de 350 à 800 mg de KOH/g, de préférence en une quantité dans la plage de 0 à 20 parties en poids supplémentaires, encore mieux dans la plage de 3 à 15 parties en poids supplémentaires, encore mieux 5 à 10 parties en poids supplémentaires, par rapport à 100 parties en poids des composants (b1) et (b2).

8. Procédé selon l'une quelconque des revendications 1 à 7, dans lequel le mélange de polyols (b) contient à raison d'au maximum 5 parties en poids supplémentaires, de préférence dans la plage de 0 à 5 parties en poids supplémentaires, encore mieux dans la plage de 0 à 3 parties en poids supplémentaires, encore mieux dans la plage de 0 à 1 partie en poids supplémentaire, par rapport à 100 parties en poids des composants (b1) et (b2), un polyétherpolyol (b5) supplémentaire, (b5) présentant un indice d'hydroxyle dans la plage de 10 à 100 mg de KOH/g, une fonctionnalité OH d'au moins 2, une teneur en oxyde d'éthylène de 0 à 30 % en poids par rapport à la teneur en oxyde d'alkylène et une proportion de groupes OH primaires de 0 à 30 % par rapport au nombre total des groupes OH dans le polyétherpolyol (b5).

9. Procédé selon l'une quelconque des revendications 1 à 8, dans lequel la composition d'agent porogène (c) est utilisée dans la réaction en un rapport pondéral au poids total de tous les composés réactifs avec les isocyanates, utilisés dans la réaction, dans la plage de 1:12 à 1:7, de préférence dans la plage de 1:11 à 1:8.

10. Procédé selon l'une quelconque des revendications 1 à 9, dans lequel l'expansion est libre.

11. Mousse de polyuréthane, obtenue ou pouvant être obtenue conformément au procédé selon l'une quelconque des revendications 1 à 10.

12. Mousse de polyuréthane selon la revendication 11, présentant une perméabilité à l'air, déterminée conformément à DIN EN ISO 7231 (décembre 2010) d'au moins 0,02 dm³/s, de préférence dans la plage de 0,02 à 1 dm³/s, encore mieux dans la plage de 0,05 à 1 dm³/s ;
et/ou
une résistance à l'écoulement de l'air (Air Flow Resistance, AFR), déterminée conformément à DIN EN ISO 9053-1 (mars 2019) d'au maximum 10 000 Pa.s/m, de préférence dans la plage de 10 à 10 000 Pa.s/m, encore mieux dans la plage de 100 à 5 000 Pa.s/m, encore mieux dans la plage de 100 à 1 500 Pa.s/m, encore mieux dans la plage de 100 à 1 000 Pa.s/m ;
et/ou
une dureté à la compression, déterminée à une compression de 40 % lors de la première compression selon DIN EN ISO 3386-1 (octobre 2015), dans la plage de 10 à 80 kPa, de préférence dans la plage de 15 à 80 kPa ;
et/ou
une masse volumique, déterminée selon DIN EN ISO 845 (octobre 2009), d'au maximum 25 kg/m³, de préférence dans la plage de 10 à 20 kg/m³, encore mieux dans la plage de 12 à 18 kg/m³ ;
et/ou
une résilience, déterminée selon DIN EN ISO 8307 (décembre 2018) dans la plage de 15 à 35 %, de préférence dans la plage de 18 à 33 %, encore mieux dans la plage de 22 à 30 %.

13. Utilisation d'une mousse de polyuréthane selon la revendication 11 ou 12 en tant que matériau d'absorption acoustique, de préférence dans un moyen de transport, de préférence dans un moyen de transport mobile, encore mieux dans un moyen de transport mobile destiné au déplacement de personnes et/ou de marchandises, le moyen de transport éant encore mieux choisi dans le groupe constitué par un aéronef, un navire, un véhicule sur rails, un camion et une automobile ; encore mieux en tant que composant d'un habillage dans un moyen de transport à l'intérieur, dans le compartiment moteur ou à l'extérieur ; encore mieux à l'intérieur d'automobile en tant qu'habilléage d'une paroi, d'une portière, d'un toit ou dans le compartiment moteur.

14. Matériau d'absorption acoustique, comprenant une mousse de polyuréthane selon la revendication 11 ou 12, consistant de préférence en une mousse de polyuréthane selon la revendication 11 ou 12.

15. Utilisation d'un mélange de polyols (b) comprenant :
(b1) 50 à 85 % en poids d'au moins un polyétherpolyol ayant un indice d'hydroxyle dans la plage de 10 à 60 mg de KOH/g, une fonctionnalité OH de plus de 2 et une teneur en oxyde d'éthylène dans la plage de 50 à 100 % en poids, par rapport à la teneur en oxyde d'alkylène dudit au moins un polyétherpolyol,
(b2) 15 à 50 % en poids d'au moins un polyétherpolyol ayant un indice d'hydroxyle dans la plage de 10 à 100 mg de KOH/g, une fonctionnalité OH de plus de 2, un teneur en oxyde d'éthylène dans la plage de 2 à 30 % en poids, par rapport à la teneur en oxyde d'alkylène dudit au moins un polyétherpolyol, et un proportion de groupes OH primaires de 40 à 100 % par rapport au nombre total des groupes OH dans ledit au moins un polyétherpolyol,
respectivement par rapport à la quantité totale en poids des constituants (b1) et (b2), qui est ainsi égale à 100 % en poids ;
ainsi que
(b3) 0 à 20 parties en poids supplémentaires d'une charge, en option transformée en dérivé, par rapport à 100 parties en poids des composants (b1) et (b2), éventuellement contenue en tant que constituant d'un polyol greffé à base d'un ou de plusieurs des composants (b1) et (b2) ;
pour la production d'une mousse de polyuréthane, de préférence d'une mousse de polyuréthane qui présente au moins une des propriétés suivantes :
- une perméabilité à l'air, déterminée conformément à DIN EN ISO 7231 (décembre 2012) d'au moins 0,02 dm³/s, de préférence dans la plage de 0,02 à 1 dm³/s, encore mieux dans la plage de 0,05 à 1 dm³/s ;
- une résistance à l'écoulement de l'air (Air Flow Resistance, AFR), déterminée conformément à DIN EN ISO 9053-1 (mars 2019) d'au maximum 10 000 Pa.s/m, de préférence dans la plage de 10 à 10 000 Pa.s/m, encore mieux dans la plage de 100 à 5 000 Pa.s/m, encore mieux dans la plage de 100 à 1 500 Pa.s/m, encore mieux dans la plage de 100 à 1 000 Pa.s/m ;
- une dureté à la compression, déterminée à une compression de 40 % lors de la première compression selon DIN EN ISO 3386-1 (octobre 2015), dans la plage de 10 à 80 kPa, de préférence dans la plage de 15 à 80 kPa ;
- une masse volumique, déterminée selon DIN EN ISO 845 (octobre 2009), d'au maximum 25 kg/m³, de préférence dans la plage de 10 à 20 kg/m³, encore mieux dans la plage de 12 à 18 kg/m³ ;
- une résilience, déterminée selon DIN EN ISO 8307 (décembre 2018) dans la plage de 15 à 35 %, de préférence dans la plage de 18 à 33 %, encore mieux dans la plage de 22 à 30 %.
